(19) Europäisches Patentamt
European Patent Office
Office européen des brevets

(11) **EP 4 727 051 A1**

(12) **EUROPEAN PATENT APPLICATION**

(43) Date of publication:
**15.04.2026 Bulletin 2026/16**

(21) Application number: **25207749.0**

(22) Date of filing: **09.10.2025**

(51) International Patent Classification (IPC):
**H04L 9/00** (2022.01)

(52) Cooperative Patent Classification (CPC):
**H04L 9/50;** H04L 2209/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.10.2024 US 202463705066 P**

(71) Applicant: **Unicity Labs OÜ**
**10151 Tallinn (EE)**

(72) Inventors:
• **Rogojin, Vladimir**
  **20780 Kaarina (FI)**
• **Buldas, Ahto**
  **Tallinn (EE)**
• **Laanoja, Risto**
  **Tallinn (EE)**
• **Gault, Michael**
  **Rovaniemi (FI)**
• **Truu, Ahto**
  **50415 Tartu (EE)**
• **Grigorenko, Pavel**
  **3043LG Rotterdam (NL)**
• **Marran, Martti**
  **5010 Tartu (EE)**

(74) Representative: **Grünecker Patent- und Rechtsanwälte**
**PartG mbB**
**Leopoldstraße 4**
**80802 München (DE)**

(54) **SYSTEM AND METHOD FOR SECURE, OFF-CHAIN TRANSACTIONS**

(57)     A distributed processing system for transactions of digital assets includes autonomous agents (410-1, 410-2, 410-N; 800) that execute off-chain. Each agent has an encapsulation of state representing at least one digital asset and is configured to process transaction requests that modify the agent state. A proof aggregation layer (300) prevents double spending of the digital assets. A consensus layer (200) forms a decentralized trust anchor that maintains a blockchain and certifies state transitions of the proof aggregation layer (300). A sending agent (10) issues a request to certify that a particular asset state has not been previously spent and if the proof aggregation layer (300) returns a uniqueness attestation ($\pi\_inc$), a recipient agent (20) can use it to verify both correctness of the transaction execution, and validity of the uniqueness attestation. Transaction execution may take place off-chain at the agents without reliance on global consensus or shared state among all network participants.

**FIG. 5**

EP 4 727 051 A1

**Description**

TECHNICAL FIELD

This invention relates to blockchain-based computing platforms.

REFERENCE TO RELATED APPLICATIONS This application claims priority of U.S. Provisional Patent Application No. 63/705,066, filed 9 October 2024.

BACKGROUND ART

Blockchain technology has revolutionized digital asset management by enabling trustless peer-to-peer transactions without relying on centralized authorities. However, traditional blockchain architectures face fundamental scalability limitations that hinder their adoption for high-throughput applications. The core bottleneck stems from the fact that the "security" depends on the number of participating validators, which all have to participate in consensus on ordering, re-execute transactions, and store every produced block.

Blockchains and decentralization are tools, not end goals in themselves. They are means to achieve specific objectives that may not be feasible or optimal in centralized systems. Bitcoin, for example, uses decentralization as a means to achieve censorship resistance and the elimination of trusted third parties in transfer of value across the Internet. By removing central points of control, decentralized applications (DApps) can create solutions that offer enhanced trust, transparency, and user empowerment. DApps can provide services that are resistant to censorship, manipulation, and single points of failure. They can enable new business models and forms of collaboration that were previously impossible or impractical. However, it's crucial to recognize that decentralization comes with trade-offs, such as potential decreases in efficiency or increased complexity.

For example, the current approach used to build DApps through blockchain-based smart contracts comes with enormous overhead. The inherent need for global ordering, with sequential block production and global state consensus, creates a bottleneck that limits performance and struggles to meet the performance demands of truly global, high-throughput systems. Consequently, running performance-demanding applications such as video games or Fully Self-Driving software in a smart contract is not feasible using existing platforms.

A system based on a blockchain is typically structured in "layers" L0-L3, which describe different functional components of the technology. These layers build upon each other, with each level adding functionality, much like layers in a smartphone's hardware and software ecosystem, to create a complete and usable blockchain system. Layer 0 (L0) is the foundational layer and comprises the fundamental elements, including the physical hardware, internet connectivity, and the underlying protocols that allow blockchains to exist and communicate. Layer 1 (L1) is the base blockchain, that is, the primary blockchain itself, like Bitcoin or Ethereum, which handles core functions such as transaction processing, data storage, and dispute resolution through its consensus mechanisms (e.g., Proof of Work or Proof of Stake). Layer 2 (L2) comprises various scaling solutions built on top of an L1 blockchain to improve its capabilities and performance, especially scalability; L2 thus attempts to improves transaction speed and reduce costs by processing transactions off the main chain, with technologies like rollups and sidechains. Finally, Layer 3 (L3) is the user-facing application layer where, for example, decentralized applications (dApps), smart contracts, and other user interfaces are developed and hosted to bring actual utility to the blockchain.

One way to conceptualize a blockchain is as a proof generation machine. That is, the blockchain is a distributed computational machine that generates cryptographic proofs of integrity, order, uniqueness, computation, ownership, and more. The machine can be centralized or decentralized, with access either permissioned or permissionless. Various incentive schemes can be devised to encourage users to operate parts of the machine, and the machine can be programmable to varying degrees. The evolution of this programmability has been a defining feature in the blockchain landscape.

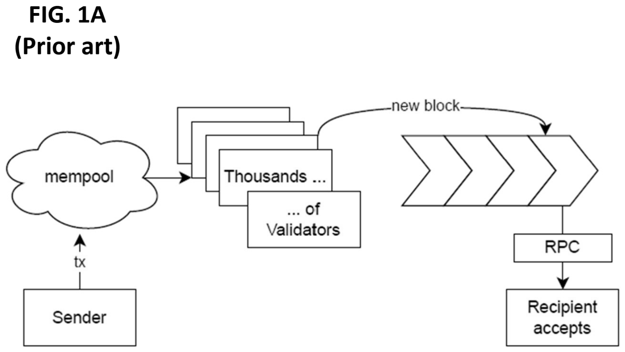

Traditional blockchain architectures require every validator node to process all transactions sequentially. This design, illustrated in Figure 1A, creates several fundamental bottlenecks: (1) computational overhead from validating every transaction, (2) storage requirements that grow linearly with transaction history, and (3) bandwidth limitations from broadcasting all transaction data to every node. These constraints result in throughput limitations measured in tens of transactions per second for major blockchain networks, and transaction processing latency (time to finality) which is not suitable for interactive use cases.

Existing scaling approaches attempt to optimize within these architectural constraints. Layer-2 solutions batch transactions but still require periodic settlement on the main chain. Sharding distributes computation but introduces complex cross-shard communication protocols. Both approaches face fundamental trade-offs between decentralization, security, and scalability.

Bitcoin, while primarily designed as a peer-to-peer electronic cash system, introduced a basic form of programmability through its scripting language. This limited scripting capability allowed for simple conditions to be attached to transactions, such as multi-signature requirements or time-locked transfers. However, Bitcoin's scripting language was intentionally restricted to maintain the network's security and focus on its primary use case as a digital currency.

The concept of a more expansive, programmable blockchain was significantly advanced by Vitalik Buterin with the introduction of Ethereum in 2015. Buterin envisioned a "world computer" - a global, decentralized platform capable of executing arbitrary code in the form of smart contracts. This vision expanded the blockchain's role from a mere ledger of transactions to a general-purpose computational infrastructure. This progression from Bitcoin's basic scripting to Ethereum's world computer marked a paradigm shift, transforming blockchains from specialized tools for cryptocurrency into general-purpose platforms for decentralized computation and application deployment.

As the complexity and usage of these smart contract platforms have grown, fundamental limitations in their design have become increasingly apparent. Blockchain computers are extremely inefficient, with throughput many orders of magnitude lower than a traditional computer. More recent concepts such as alternative consensus protocols, layer-two solutions and sharding introduce various incremental innovations, but these are either short-term workarounds attempting to address the limitations of the base layer or they compromise either security or decentralization. For instance, layer-two solutions like rollups for Ethereum can increase transaction throughput by one or two orders of magnitude but then reach a hard limit. They also introduce additional complexity such as the need for centralized sequencers with escape hatches etc., which cause potential security vulnerabilities at the points where they interface with the main chain. Sharding is another area of scalablity research; however, it introduces new challenges in cross-shard communication that can potentially fragment the network's security model.

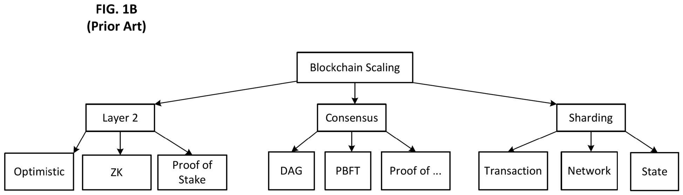

Figure 1B is an overview of various existing approaches to blockchain scaling, in which ZK, DAG and PBFT stand for "Zero Knowledge", "Directed Acyclic Graph" and "Practical Byzantine Fault Tolerance respectively.

The core issue remains: traditional blockchain architectures struggle to scale without sacrificing either security, decentralization, or both.

SUMMARY OF THE INVENTION

The invention provides a distributed processing system for transactions of digital assets, as well as a corresponding method of operation, according to the accompanying patent claims.

BRIEF DESCRIPTION OF THE DRAWINGS

Figure 1A illustrates data flow in a typical prior art blockchain.

Figure 1B illustrates various existing approaches to blockchain scaling.

Figure 2 shows three main layers in a layered infrastructure according to various embodiments of the invention.

Figures 3A and 3B illustrate at a high level the structural difference between a traditional L1/L2 approach and the Unicity platform, respectively.

Figure 4 illustrates a consensus layer with a Proof of Work trust anchor.

Figure 5 illustrates data flow of transactions in the infrastructure according to the invention.

Figure 6 depicts a simplified transaction flow according to the invention.

Figure 7 shows an interactive protocol for generating unlinkable public keys.

Figure 8 shows a non-interactive protocol that is secure against a malicious sender.

Figure 9 illustrates sharding of an Proof Aggregation Layer.

Figure 10 depicts a security model of an Proof Aggregation Layer.

Figure 11 illustrates an example of a SNARK circuit.

Figure 12 depicts one hashing cell of the circuit of Figure 11.

Figure 13 illustrates an example of processing of a state transition request.

Figure 14 illustrates agent synchronization.

Figure 15 is a simplified depiction of agent-based decentralized exchange.

Figure 16 is a simplified illustration of how an embodiment of the invention can be used to implement decentralized gaming.

Figure 17 is a simplified depiction of agents coordinating on a task through trustless state verification.

Figure 18 illustrates an example of the data flow of a transaction.

DETAILED DESCRIPTION

Because it is the name used internally and in prototypes, the invention is referred to generally below as "Unicity", which provides a new system and method for decentralization. Rather than attempting to optimize within the constraints of traditional blockchain designs, Unicity introduces a fundamentally new approach to building decentralized applications. A key contribution is that Unicity allows the execution of applications (such as smart contracts) off-chain but with the same cryptographic guarantees as if they were executing on-chain, i.e., instead of all contracts (for example) being stored in the same shared global ledger and competing for the same resources, Unicity introduces a novel approach that allows execution to happen in parallel off-chain.

The key cryptographic guarantee that is handled differently in Unicity is proof of uniqueness. Proof of uniqueness, or non-forking, is one of the key proofs that a blockchain provides. In Bitcoin, for example, Proof of Work is used to guarantee that there is a single unique version of the blockchain. The proof of uniqueness in this case is probabilistic, i.e., there may be other copies (forks) but over time the incentive scheme ensures that miners will converge onto the chain with most work (the longest chain rule). This uniqueness proof covers all transactions in a block as all transactions are included in the Proof of Work calculation.

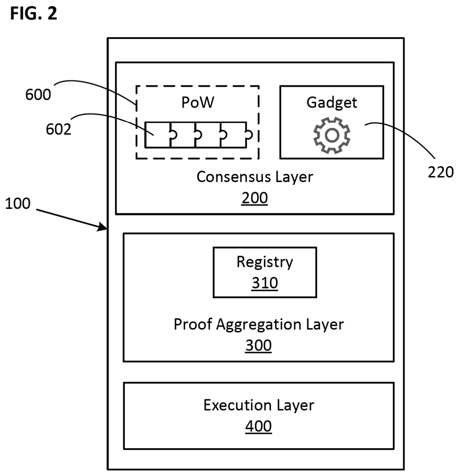

As Figure 2 illustrates, at an abstract level the design of the Unicity infrastructure 100 is divided into three layers: A consensus layer 200, a proof Proof Aggregation Layer 300 and an agent layer 400, also referred to as an "execution layer". A fourth Proof of Work (PoW) layer 600, implemented preferably within the Consensus Layer 200 and comprising a blockchain 602, may also be added in implementations that use PoW consensus. The consensus layer 200 acts as trust anchor to attest to the uniqueness of local agent state and may also provide decentralized agreement and cryptoeconomical incentives.

In the proof Proof Aggregation Layer 300, which maintains a distributed append-only dictionary of spent token states, a permissionless version of Unicity may use a Proof of Work, but any Proof system could be used, including Proof of Stake, Proof of Authority, trusted hardware, etc. The main design consideration in this choice is preferably that the on-chain shared global state should be kept as small as possible.

Unicity may be used for any form of transaction that involves a change of state of any unit or collection of digital information, including but not limited to such constructs as smart contracts. By way of non-limiting example, Unicity is described below primarily in terms of "contracts", but this term should thus be interpreted broadly. In Unicity, transactions, or more generally state *transitions,* are not included in blocks. Instead, state transitions happen at the agent/execution layer 400 where each of a plurality of agents will order and execute transactions and then send a corresponding request to the Proof Aggregation Layer 300. The requesting agent will receive back a uniqueness proof for the set of transactions that it executed. Effectively, the proof Proof Aggregation Layer 300 aggregates requests for agents executing in parallel, commits the aggregate request to the consensus layer 200 and returns to each individual agent a proof of uniqueness for that agent's state history.

*Unicity* thus provides a novel blockchain infrastructure that enables secure off-chain transactions while maintaining the trustless guarantees of traditional blockchains. A key insight underlying Unicity is that the vast majority of blockchain operations-transaction execution, smart contract processing, and state transitions-can be moved off-chain, leaving on-chain only the mechanism to prevent "double spending", that is, the creation of multiple valid transactions spending (that is, transferring control over) the same digital asset. Note that "spending" does not necessarily imply any restriction to financial transactions; rather, in the context of this invention, unless otherwise made clear explicitly or from context, "spending" means relinquishing control or "ownership" of whatever a digital asset is or represents and transferring this control to another entity, that is, another agent. Other functions, including transaction execution, smart contract processing, state updates, and data availability, can be provided by interested parties without global, on-chain agreement. This also simplifies on-chain operations, making efficient and self-authenticating implementations possible. By minimizing the data that must be processed by the consensus layer, Unicity achieves linear scalability while preserving the security properties that make blockchains trustworthy.

Our novel approach thus differs fundamentally from existing scaling solutions. Rather than optimizing transaction throughput within the constraints of traditional blockchain architectures, Unicity reconceptualizes the shared server-side functionality as a minimal, trustless service which prevents double-spending. This architectural shift enables transactions to occur off-chain and, in embodiments that include hardware-based unicity-proving functionality, completely offline, while maintaining cryptographic guarantees against fraud.

Unicity is a new blockchain platform for the development of scalable decentralized applications based on a network of verifiable, autonomous agents, each of which will typically comprise an application or, in general, a body of code that can be executed by processors, in respective computing platforms. Note that, in this invention, the term "agent" is not to be viewed as restrictively as is found in many other computer science areas, in particular AI. In this invention, an "agent" is a body of independent and host-environment agnostic executable code with persistent state, a verifiable state transition history, and a unique self-authenticated identity used to be addressed independently of the agent's physical location. An agent in this invention can be, for instance, a piece of program code and implement itself together with the runtime or be part of a program or application, a Docker container, a virtual machine (VM), a private blockchain instance, etc.. and may be fully abstracted from the host environment, as long as they are accessible, for example, over a network, by users. The agent thus may "reside" in its own sandboxed environment and does not depend in general on a specific host, although users may of course choose to host their agents as well.

It is also not necessary according to the invention for users to be human; rather, automated trading or other transaction platforms could be "users" that initiate and complete transactions by sending the appropriate commands and information to their respective agents.

A key feature is disaggregation of a uniqueness (non-forking) proof for the blockchain as a whole, allowing uniqueness proofs to be generated for individual agents executing in parallel off-chain, meaning that the agents are able to carry out their processing and other tasks relating to transactions without having to rely on interaction with a single, global primary blockchain network. This removes two of the key scaling bottlenecks from which known systems suffer in that, in Unicity, there is no restriction on size, since agents are not stored on-chain, and there is no restriction on compute as agents execute locally in their own environments. Agents interact by synchronizing provably unique state histories. As all computation happens in parallel off-chain, practically unlimited throughput can be achieved. Unicity acts as a decentralized microservices platform, breaking down a decentralized application into small independent agents that can be developed, deployed and scaled without a centralized gatekeeper and that can execute transactions off-chain, independent of a need for global consensus or shared state among all other network participants.

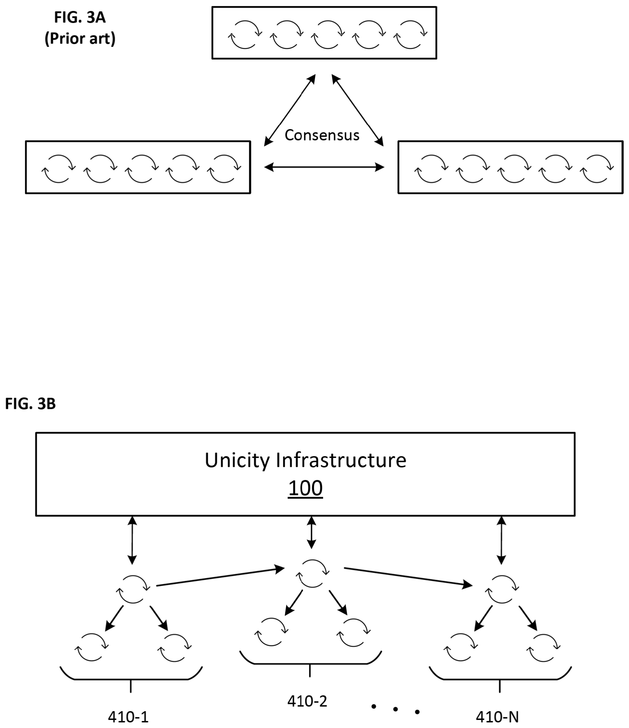

Figures 3A and 3B illustrate at a high level the structural difference between a traditional L1/L2 approach (Figure 3A) and the Unicity platform (Figure 3B). In Unicity, dynamically spawned (one per contract) agent instances 410-1, 410-2, ..., 410-N perform local transaction ordering, obtain a unicity proof and synchronize state with other agent instances. In the general case, there will be an "interested party" (players in a game, owners of tokens) to ensure verifiability and availability. For example, consider a simple turn-based game played by three players. In this case, there will be three interested parties. To run this game on-chain either in an L1 or an L2 would be highly inefficient, as all the validators would need to execute the game (and all other games) as part of the consensus process. The Unicity approach is, in contrast, to define the game logic as an agent template with the three players running agent instances. At each turn the respective player agent instance would update its state, generate a uniqueness proof and synchronize with other agent instances.

A more fundamental example would be digital cash or agents as fungible currency tokens. In this case, for each token there is a single interested party (whoever has ownership of the token). Whenever two parties wish to transact, the sender will update ownership of the token to the recipient, generate a uniqueness proof and synchronize its state with a new agent instance created by the recipient. After this point, the sender is no longer an interested party.

A zero-pre-mine Proof of Work chain is preferably used as the Consensus Layer 200, with various modifications. One such blockchain is the public blockchain known as Alphacash, which may be used both as the trust anchor and as the native currency of the system (for compensating network participants and paying of transaction fees). Alphacash has the following properties:

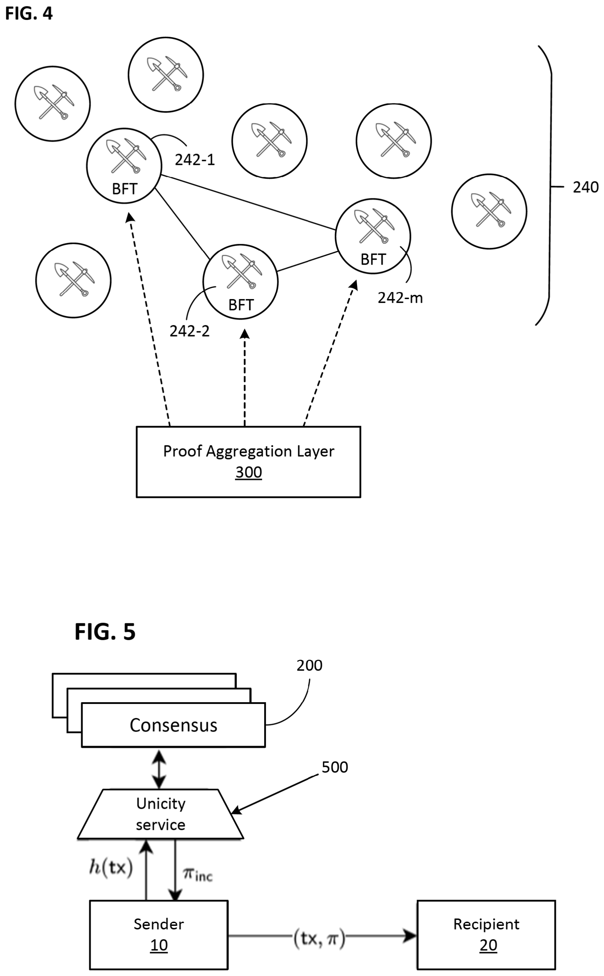

a. It works on two-minute block times with a RandomX ASIC-resistant hashing algorithm.
b. See Figure 4. A subset (242-1, 242-2, ..., 242-m) of miners (labeled generally as group 240), logically within the Consensus layer 200 based on winning past block rewards, self-select to operate a Byzantine Fault Tolerant (BFT) consensus subnet operating at, for example, one-second block times. The BFT subnet preferably includes a finality gadget 220 to periodically ensure settlement finality.
c. Transactions are restricted to single inputs, enabling the overall ledger to be decomposed into compact individual coin sub-ledgers that can be verified with the same trust assumptions as the full chain. This allows the coin sub-ledgers to be extracted from the blockchain and used off-chain, such as for paying transaction fees in Unicity.

Figure 5 illustrates the Unicity transaction flow when a sending agent 10 (Sender) wishes to transfer a digital asset to a receiving agent 20 (Recipient), which will want to verify the authenticity of transactions cryptographically before accepting ownership; in particular, the Recipient 20 will want to verify that the digital asset being transacted has not already be transferred to another agent, that is, double-spent. Rather than broadcasting full transaction data to all network participants, Unicity maintains only a cryptographic commitment to spent asset states. In the figure, tx indicates transmission and $\pi_{inc}$ represents an inclusion proof, which will be explained in greater detail below.

Unicity as a transacting framework provides three essential guarantees: (1) unique spending-a digital asset can be spent no more than once, (2) non-blocking-only the legitimate owner of an asset can mark this asset as spent, and (3) privacy-transaction details remain confidential between participants, hidden from the Unicity Service 500 (see below, sometimes abbreviated "US" for conciceness ).

By decoupling transaction execution from consensus, Unicity enables new use cases previously impractical on traditional blockchains. Transactions can occur entirely off-chain, requiring no network connectivity at the time of execution. Multiple parties can transact directly using any communication channel, from internet protocols to physical media exchange. The resulting system scales linearly with the number of participants rather than facing the quadratic complexity growth of traditional blockchain networks.

The Unicity execution framework provides a *Unicity Service* 500 that maintains a global, append-only registry of the state of spent "tokens". Tokens as such are a known concept and are a digital asset that represents value, ownership, or utility on a blockchain (which, in Unicity, need not be a single global blockchain). In Unicity, each digital token has an associated state hash that uniquely identifies its current ownership and transaction history. When a current token owner wishes to transfer ownership, the owner creates a signed transaction that references the current state and specifies the new owner.

As mentioned above, the Unicity infrastructure is a layered, hierarchical architecture with three main layers, each of which performs distinct functions: The three layers serve distinct functions:

The Consensus Layer 200 provides decentralized agreement and finality through a combination of Proof-of-Work mining, providing robust decentralization, and BFT (Byzantine Fault Tolerant) consensus with fast and deterministic finality. This layer verifies the integrity of the Proof Aggregation Layer's state transitions and serves as the root of trust for the entire system.

The Proof Aggregation Layer 300 implements the Unicity Service 500, maintaining a global append-only registry 310 (Figure 2) of spent token states. It provides inclusion and non-inclusion proofs, processes state certification requests, and with these services allows the Execution Layer 400 to avoid the risk of double-spending. The Proof Aggregation Layer is preferably sharded for scalability, clustered for high availability, and uses cryptographic consistency proofs to maintain trustless operation. The Proof Aggregation Layer 300 thus forms a double-spending prevention subsystem that operates as a modular component separate from transaction execution and that is configured to the double-spending prevention subsystem configured to receive requests to certify that a particular asset state has not been previously spent; to generate uniqueness attestations certifying that each asset state is spent at most once; and to provide said uniqueness attestations to agents.

The Execution Layer 400 handles transaction processing, smart contract execution (implemented through orchestrated execution of programmable stateful spending conditions) and business logic as needed. This layer operates off-chain and is managed by users and agents who are interested parties in transaction validation and ordering.

Each of these layers is implemented as respective bodies of computer-executable code that are stored in any known volatile or non-volatile storage devices that are located within the respective computing platforms that host them and perform the processing steps described below. Consequently, reference to an entity such as a "Sender" or "Recipient" performing an action, unless otherwise indicated or clear from context, is to be read as the entity's associated computing platform performing the actions.

Note that some layers may themselves comprise a plurality of computing platforms; for example, consensus implies more than one participating entity and the execution layer will typically comprise many different agents/users, each of which may have a separate computer. Because the transfers of tokens described here are carried out by the various computing platforms, which communicate with each other over any known channels, such as private or public networks accessed by network interface hardware within the computing platforms, the invention in practice provides a more efficient and highly scalable system of operation of the cooperating computing platforms to perform the task of token transfer. Scalability relates not only to how many transactions may be processed per time unit, but also how many different computing platforms may be included in the cooperating network and thus is an improvement in scalability of both hardware and functionality.

Protocol Participants

Within this architecture, the protocol involves three entities:

Token Owners, who will be Senders 10, possess digital assets represented as tokens with unique state hashes.

Owners sign transactions to transfer ownership and request certification from the Proof Aggregation Layer 300.

Unicity Service 500 (provided by the Proof Aggregation Layer 300) maintains a data store, which may, for the sake of better comprehension, be modeled as key-value store R where keys are derived from public keys and state hashes, and values are transaction hashes. The service accepts certification requests and provides inclusion proofs for registered transactions.

Recipients 20, that is, recipient agents, are the relying parties who receive token transfers and must verify the authenticity of transactions cryptographically before accepting ownership.

Transaction Structure

Each transaction $T = (h_{st}, D)$ comprises:

- $h_{st}$: the current state hash of the token being transferred
- $D = (pk', x, aux)$: transaction data containing the recipient's public key pk', a random nonce $x$, and auxiliary data aux

To prevent information leakage, the transaction data $D$ is committed using a perfectly hiding commitment scheme (see below), producing a transaction data hash $h_{tx} = Com^c(H(D))$. The sender signs $H(h_{st}, h_{tx})$ and submits a certification request $Q = (pk, h_{st}, h_{tx}, \sigma)$ to the Unicity Service 500.

Double-Spending Prevention

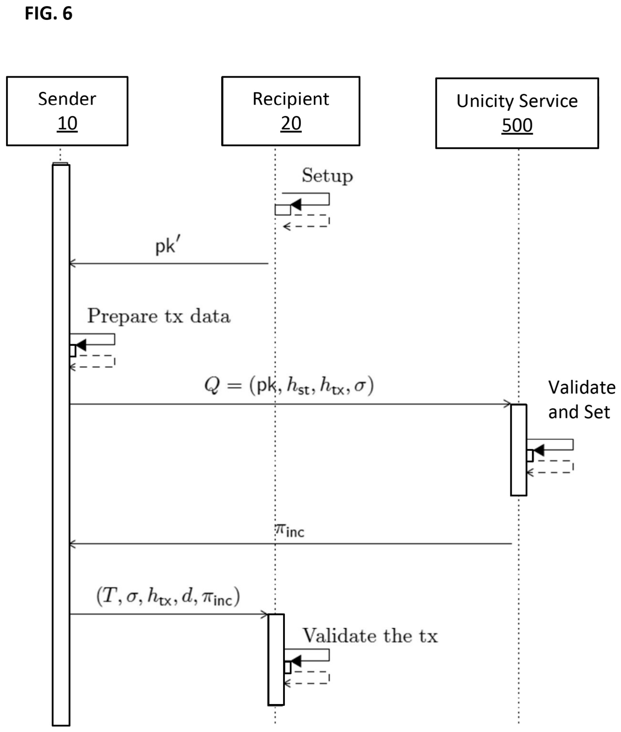

The Unicity Service, in particular the Proof Aggregation Layer 300, processes certification requests by checking that (1) the digital signature is valid and (2) the key $H(pk, h_{st})$ has not been previously registered. If both conditions hold, the service records the mapping $R[H(pk, h_{st})] \leftarrow h_{tx}$ and returns an inclusion proof $\pi_{inc}$, which forms a uniqueness attestation. This mechanism ensures that each token state can be spent at most once. The preferred transaction flow is illustrated by the sequence diagram in Figure 6.

The formal analysis that follows demonstrates that this construction provides strong security guarantees against both double-spending and blocking attacks while preserving transaction unlinkability.

Preliminaries and Notation

To more thoroughly explain not only various functions and operations performed by the invention, as well as to formally describe its uniqueness relative to the prior art, we will here define and explain various concepts that underly different aspects of the invention.

Probabilities

In this disclosure, we consider only *finite probability spaces* that are defined as pairs $(\Omega, Pr)$ such that $\Omega$ is a finite set and Pr is a function from the powerset (the set of all subsets) of $\Omega$ to the interval $[0,1]$ of real numbers such that:

1.

$$Pr(\Omega) = 1$$

2.

$$Pr(A \cup B) = Pr(A) + Pr(B) \text{ for every } A, B \subseteq \Omega \text{ with } A \cap B = \emptyset$$

The set $\Omega$ is called the *sample set* and Pr is called the *probability function*. The subsets of $\Omega$ are called *events*. For the probability $Pr[\{\omega\}]$ of a singleton subset we use shorthand notation $Pr[\omega]$. By a *random variable* we mean any function $X: \Omega \to R$ where $R$ is called the *range* of the random variable. If $x \in R$ we use the notation $Pr[X = x] = Pr[X^{-1}(x)]$, where $X^{-1}(x) = \{\omega \in \Omega: X(\omega) = x\}$ is the X-preimage of $x$.

As $\Omega$ is finite, we can express the probability $Pr(A)$ of any event $A$ as the sum $Pr[A] = \Sigma_\omega Pr[w] \cdot [w \in A]$, where $[w \in A]$ is the *Iverson symbol,* i.e. $[w \in A] \in \{0,1\}$ and $[w \in A] = 1$ iff $w \in A$. We also use Iverson symbol in a more general case for any mathematical statements $\mathcal{A}$ so that $[\mathcal{A}] = 1$ iff $\mathcal{A}$ holds. For example, $Pr[X = x] = \Sigma_\omega Pr[w] \cdot [X(w) = x]$. Note that $[\mathcal{A} \wedge \mathcal{B}] = [\mathcal{A}] \cdot [\mathcal{B}]$ for any two statements $\mathcal{A}$ and $\mathcal{B}$.

By the *probability distribution* of a random variable $X: \Omega \to R$ we mean the function $\mathcal{D}_X : R \to [0,1]$ such that $\mathcal{D}_X(x)$ = Pr[$X = x$] for every $x \in R$. If $\mathcal{D}_X$ is a constant, i.e. $\mathcal{D}_X(x) = \frac{1}{|R|}$ for every $x \in R$, then we say that the distribution is *uniform*. We use the notation $X \leftarrow R$ to denote that $X$ is a uniformly distributed random variable with range $R$ and also say that $X$ is *uniformly sampled* from $R$. A random variable $X: \Omega \to R$ is *t-time sampleable* if there is a *t-time* probabilistic Turing machine M with all outputs values in $R$ and every output value $x \leftarrow$ M occurs with probability $\mathcal{D}_X(x)$, i.e. the output distribution of M is $\mathcal{D}_X$.

If $X: \Omega \to R_X$ and $Y: \Omega \to R_Y$ are random variables, $x \in R_X$ and $y \in R_Y$, then we use the notation Pr[$X = x, Y = y$] = Pr $[X^{-1}(x) \cap Y^{-1}(y)] = \Sigma \omega \, Pr[\omega] \cdot [X(\omega) = x \wedge Y(\omega) = y]$. The probability distribution $\mathcal{D}_{X,Y}: R_X \times R_Y \to [0,1]$ defined by $\mathcal{D}_{X,Y}(x, y)$ = Pr[$X = x, Y = y$] is called the *joint distribution* of $X$ and $Y$. We say that $X$ and $Y$ are *independent* if

$$\Pr[X = x, Y = y] = \Pr[X = x] \cdot \Pr[Y = y]$$

for every $x \in R_X$ and $y \in R_Y$. If $(\Omega_1, Pr_1)$ and $(\Omega_2, Pr_2)$ are probability spaces, then their *direct product* is the probability space $(\Omega, Pr)$, such that $\Omega = \Omega_1 \times \Omega_2$ and $Pr[\omega_1, \omega_2] = Pr_1[\omega_1] \cdot Pr_2[\omega_2]$ for every $\omega_1 \in \Omega_1$ and $\omega_2 \in \Omega_2$. Below, the indices of the probability functions will be omitted where this will not cause confusion.

Security and Security Proofs

A *cryptographic primitive* is described as a list of (parametrized) algorithms, correctness conditions (invariants) and attack scenarios. Adversaries are algorithms that participate in the security scenarios (interacting with environment) and break (are successful in the attack scenario of) the primitive with certain success probability. If the parameters of a cryptographic primitive are fixed, one gets an *instance* of the primitive.

Every instance $f$ of a primitive has a *security profile,* which is a function $S_f: [0,1] \to \mathbb{N}$ that for every $\varepsilon \in [0,1]$ returns a lower bound $S_f(\varepsilon)$ of the running time of an adversary that is able to break the primitive with success probability at least $\varepsilon$. Security profiles are non-decreasing, i.e. $S_f(\varepsilon) \le S_f(\varepsilon')$ whenever $\varepsilon \le \varepsilon'$. Therefore, every adversary that breaks a primitive $f$ with success probability $\varepsilon$ has running time $t \ge S_f(\varepsilon)$.

Sometimes an instance of a cryptographic primitive $g$ is constructed from instances $f_1, ..., f_m$ of other cryptographic primitives (using known programming techniques). *A security reduction* (or *security proof*) is a mathematical proof that the constructed primitive $g$ hash a security profile $S_g$ based on the security profiles $S_{f_1}, ..., S_{f_m}$ of $f_1, ..., f_m$, respectively.

Usually, in such a proof it is assumed that there is an adversary A with running time t that breaks $g$ with success probability $\varepsilon$ and then the adversaries $A_1, ..., A_m$ are constructed based on $A$ that break $f_1, ..., f_m$, with (some unknown) success probabilities $\varepsilon_1, ..., \varepsilon_m$, respectively so that the inequality $\varepsilon \le \varepsilon_1 + \cdots + \varepsilon_m$ holds.

Mostly, $A_1, ..., A_m$ use A as black-box, i.e. either call or simulate A and add some computational instructions. In this disclosure, the only reductions considered are those where $A$ is called only once by every $A_i$ i.e. the running times of $A_1, ..., A_m$ are upper-bounded by $\tau_1(t), ..., \tau_m(t)$, respectively, where $\tau_i$ is the computational time overhead function for constructing $A_i$ from A. Therefore, we have inequalities:

$$\tau_1(t) \ge S_{f_1}(\epsilon_1), \quad \tau_2(t) \ge S_{f_2}(\epsilon_2), \quad ... \quad \tau_m(t) \ge S_{f_m}(\epsilon_m)$$

that imply $t \ge \min_{\epsilon_1 + \cdots + \epsilon_m = \epsilon} \max\{\tau_1^{-1}(S_{f_1}(\epsilon_1)), ..., \tau_m^{-1}(S_{f_m}(\epsilon_m))\}$, i.e. such reductions will prove the following security profile $S_g$ of $g$:

$$S_g(\epsilon) = \min_{\epsilon_1 + \cdots + \epsilon_m = \epsilon} \max\{\tau_1^{-1}(S_{f_1}(\epsilon_1)), ..., \tau_m^{-1}(S_{f_m}(\epsilon_m))\} \quad (1)$$

The minimum is necessary because it is necessary to consider the worst distribution of $\varepsilon_1, ..., \varepsilon_m$ because the only fact one can know about $\varepsilon_i$ is that they are non-negative and their sum is $\varepsilon$. Equation (1) implies a simpler but weaker profile $S'_g$:

$$S'_g(\epsilon) = S_{\min}(\epsilon/m) = \min\{\tau_1^{-1}(S_{f_1}(\epsilon/m)), ..., \tau_m^{-1}(S_{f_m}(\epsilon/m))\} .$$

Moreover, if $\tau(t) = \max\{\tau_1(t), ..., \tau_m(t)\}$ and $S_{min}(\varepsilon) = \min\{S_{f_1}(\varepsilon), ..., S_{f_m}(\varepsilon)\}$ then we have even simpler security profile $S''_g$ for $g$ defined by:

$$S''_g(\epsilon) = \tau^{-1}\left(S_{\min}\left(\frac{\epsilon}{m}\right)\right) . \qquad (2)$$

In the security reductions described below, the time overhead function $\tau$ is linear, i.e. $\tau(t) = \alpha t + \beta$, where $\alpha$ and $\beta$ are reduction-specific constants.

Signature Schemes

*A signature scheme* is a triple (G, S, V) of algorithms such that:

- (pk, sk) $\leftarrow$ G generates a public key pk and a private key sk
- $\sigma \leftarrow$ S(sk,$m$) generates a signature on a message $m$
- $b \leftarrow$ V(pk, m, $\sigma$) verifies a signature on a message (accepts if $b = 1$) such that for every message m the following *verification identity* holds:

$$\Pr[(\mathrm{pk}, \mathrm{sk}) \leftarrow \mathrm{G}: \ \mathrm{V}(\mathrm{pk}, m, \mathrm{S}(\mathrm{sk}, m)) = 1] = 1 .$$

A signature scheme (G, S, V) is S-secure against existential forgeries under adaptive chosen message attacks (S-secure EF-CMA) if it has S as a security profile in the following attack scenario:

1) (pk, sk) $\leftarrow$ G;
2) (m, $\sigma$) $\leftarrow A^{S(sk;)}$(pk);
3) *the attack is successful iff* V(pk, *m*, $\sigma$) = 1 *and A never queries* S(sk; *m*).

One-Way Functions

Let $f: X \rightarrow Y$ be any function from a range $X$ to a domain $Y$. A function f is S-secure one-way if it has S as a security profile in the following attack scenario:

1) $x \leftarrow X$, *i.e. x is chosen uniformly at random from the domain X;*
2) $x' \leftarrow A(f(x))$;
3) *the attack is successful if* f (*x'*) = f(*x*).

Hash Functions

*A hash function family* is a pair (G, H) where:

- G is a probabilistic algorithm that chooses a parameter par

- H is a deterministic algorithm such that for every value of par, the function $H = H(par;\cdot)$ is of type $\{0,1\}^* \rightarrow \{0,1\}^k$.

A hash function family (G, H) is S-secure collision-resistant if it has S as a security profile in the following attack scenario:

1) par $\leftarrow$ G;
2) (m, m') $\leftarrow A$(par);
3) *the attack is successful iff m* $\neq$ m' *and* H(par; *m*) = H(par; *m'*).

Below, it is assumed that the sampling par $\leftarrow$ G has been done before any attack scenario, and, for succinctness, it is in places stated that the function $H = H(par;\cdot)$ itself is collision-resistant regardless of the fact that no fixed function can formally be collision-resistant.

A function $H: \{0,1\}^* \rightarrow \{0,1\}^k$ is S-secure $(k, \ell)$ - *one-way* if it has S as a security profile in the following attack scenario:

*1) (h, a) ← A₁;*
*2) x ← {0,1}ℓ;*
*3) x' ← A₂(a; H(h, x));*
*4) the attack is successful iff h ∈ {0,1}ᵏ, x' ∈ {0,1}ℓ and H(h, x) = H(h, x').*

Equivalently, *H* is S-secure ($k, \ell$)-one-way iff the function $f_h$ defined by $f_h(x) = H(h, x)$ is S-secure one-way for every $h \in \{0,1\}^k$.

Commitment Schemes

*A commitment scheme* is a triple (Set, Com, Open) of probabilistic algorithms such that:

- par ← Set is the setup algorithm that fixes the parameters of the scheme

- (*c, d*) ← Com(par; *m*) computes commitment *c* and decommitment string *d* of a message *m*

- *m* ← Open(par; *c, d*) opens the commitment

such that for every *m,* the following correctness identity holds:

$$m = \mathrm{Open}(\mathrm{par}; \mathrm{Com}(\mathrm{par}; m)) \, .$$

Let Comᶜ(par, *m*) denote the function that computes (*c, d*) ← Com(par; *m*) and returns *c*. We will often omit the parameter par and use shorthand notations Com(*m*), Comᶜ(*m*) and Open(*c, d*) instead of Com(par; *m*), Comᶜ(par; *m*) and Open(par; *c, d*), respectively.

In the trivial commitment scheme (Set, Com, Open) the functions are defined as follows:

- Set *always returns* ⊥.

- Com(*m*) = (*m*, ⊥) *is the identity function.*

- Open(*c, d*) = *c just returns the first argument.*

In terms of security, commitment schemes are required to be *binding* and *hiding.* Binding property means that once the commitment *c* is fixed, it is not possible (or is very hard) to open it in two different ways. Hiding property means that the commitment c must not contain efficiently extractable information about the committed message.

Binding

A commitment scheme (Set, Com, Open) is S-secure computationally binding if it has S as a security profile in the following attack scenario:

1) par ← Set;
*2) c, d, d' ← A(par);*
*3) the attack is successful if Open(par; c, d) ≠ Open(par; c, d').*

This property is called *computational binding* because it protects against adversaries with limited computational power. There exist commitment schemes that are *perfectly binding,* which means that opening a commitment in two different ways is impossible by definition. For example, the trivial commitment is perfectly binding, however it is "perfectly non-hiding" because the commitment of m is m itself.

Hiding

A commitment scheme (Set, Com, Open) is said to be perfectly hiding if for every par and for every two messages m, m' the commitments c ← Comᶜ(par; m) and c' ← Comᶜ(par; m') have equal probability distributions as random variables (assuming that the two calls of Com use independent internal random strings).

Perfectly Hiding Commitments and One-Wayness

Let $f$ be a one-way function and (Set, Com, Open) be a perfectly hiding commitment scheme. It can be shown that $f$ remains hard to invert even if, in addition to the image $f(x)$, the adversary also knows the commitment $\text{Com}^c(x)$.

As mentioned above, the main components of the invention are the three layers: the Consensus Layer 200, the Proof Aggregation Layer 300, and the Execution Layer 400. These will now be described individually, starting with the Execution Layer 400. Because of their interaction, however, the description of each of the layers may reference and also describe features and functions of the other layers.

Execution Layer 400

The Unicity infrastructure maintains identifiable digital assets called *tokens.* For example, tokens can represent units of digital currency, or identifiers of items in a supply chain, or ownership certificates of physical assets, or, in general, anything that can be identified uniquely by digital information.

*Parties* can *create (issue)* tokens, *own* tokens, and *transfer* tokens to each other, i.e. the ownership of tokens may change. In order to transfer a token, its owner makes a signed *transaction* that redefines the ownership.

Transferred tokens can be sent using any known channels, such as over a network, and their storage does not necessarily require dedicated hardware devices, although this would be possible in highly secure or classified scenarios. At the same time, the infrastructure has to guarantee some properties of the tokens such as *unique ownership,* i.e. the owner of a token should not be able to transfer the token to two different parties (i.e. *double-spend* the token) and once a token has been transferred, neither the previous owner nor any third parties should be able to do anything with the token- transfer it or make it unusable for the next owner (i.e. *block* the token).

As nothing prevents copying of digital information, some additional components are therefore needed in the infrastructure to guarantee the desired properties of tokens. For this, the Unicity infrastructure includes the *Unicity Service* 500-a preferably online functionality that all parties can communicate with over any known channel such as a public or private network.

Assume that (G, S, V) is a signature scheme and $H$ is a hash function.

Unicity Service 500

To initially simplify the description, the Unicity Service may be described as an ideal functionality. Thereafter we describe how to implement the service in a secure and efficient way.

The *Unicity Service* US may be modeled as a state machine with state $R,$ which is a key-value store (dictionary), where both keys and values are of type $\{0,1\}^{|k|}$. Initially, $R = \emptyset$. We will write $R[k] = \perp$ if there are no pairs $(k, v)$ stored in $R$.

Every input request $Q$ is a tuple (pk, $h_{st}$, $h_{tx}$, $\sigma$), where:

- pk of type $\{0,1\}^p$ is a public key: the public key of the current owner of a token, i.e. the owner before the transaction with the hash $h_{tx}$ is executed;
- $h_{st}$ of type $\{0,1\}^k$ is a state hash: the hash of the state of the token before the transaction is executed;
- $h_{tx}$ of type $\{0,1\}^k$ is a transaction data hash (defined later);
- $\sigma$ of type $\{0,1\}^s$ is a digital signature of the transaction.

The request $Q = $ (pk, $h_{st}$, $h_{tx}$, $\sigma$) is processed by US with the state $R$ as follows:

1) If $R[H(\text{pk}, h_{st})] = \perp$ and V(pk, $H(h_{st}, h_{tx})$, $\sigma$) = 1 then
$R \leftarrow R \cup \{(H(\text{pk}, h_{st}), h_{tx})\}$ , i.e. the new value of $R$ is defined by setting R $[H(\text{pk}, h_{st})] \leftarrow h_{tx}$ and leaving the rest of the contents of $R$ unchanged.
2) A proof $\pi_{inc}$ of the statement $R[H(\text{pk}, h_{st})] = v$ (inclusion proof) is returned.

If $R_0 = \emptyset$ then the initial state, $Q_1, Q_2, ... , Q_n$ is any sequence of queries, and $R_i$ is the state after the request $Q_i$ then:

- $R_0 \subseteq R_1 \subseteq \cdots \subseteq R_n$, i.e. the elements are never removed.
- The state $R_n$ is a *partial function,* i.e. $\{(k, v), (k, v')\} \subseteq R$ implies $v = v'$.

A key $k$ is *blocked* if $R[k] \neq \perp$.

Verification Function

The inclusion proofs $\pi_{\text{inc}}$ can be verified by any party using a verification function $V$ such that:

- If $V(k, v; \pi_{inc}) = 1$ then $R[k] = v$ in the current state $R$ of US. Hence, as $R$ is a partial function, for every $k, v, v', \pi_{\text{inc}}, \pi'_{\text{inc}}$, the following implication holds:

$$\mathcal{V}(k, v; \pi_{\text{inc}}) = \mathcal{V}(k, v'; \pi'_{\text{inc}}) = 1 \quad \Rightarrow \quad v = v' .$$

- If $R[H(\text{pk}, h_{\text{st}})] = h_{\text{tx}}$ after a request $\pi_{\text{inc}} \leftarrow \text{US}(\text{pk}, h_{\text{st}}, h_{\text{tx}}, \sigma)$ to the Unicity Service, then $V(H(\text{pk}, h_{\text{st}}), h_{\text{tx}}, \pi_{\text{inc}}) = 1$.

Transactions with a Token

For every token, a state hash $h_{\text{st}}$ is computed and has an owner $A$ with a public key pk. Call the pair (pk, $h_{\text{st}}$) a *state* of the token. Every (unsigned) transaction with the token is a pair $T = (h_{\text{st}}, D)$, where:

1) $h_{\text{st}}$ is the state hash before executing the transaction,
2) $D$ contains the following fields:

- pk': the public key of the next owner,

- $x$: a uniformly chosen random string $x \leftarrow \{0,1\}^{\ell}$,

- aux: other data of the transaction.

-

Certifying a transaction $T = (h_{\text{st}}, D)$ involves the following steps:

1) $(h_{\text{tx}}, d) \leftarrow Com(H(D))$ is computed using a perfectly hiding commitment scheme (Set, Com, Open). The commitment $h_{\text{tx}}$ is called the *transaction data hash.*
2) The hash value $h_T = H(h_{\text{st}}, h_{\text{tx}})$ is computed.
3) A digital signature $\sigma \leftarrow S(\text{sk}, h_T)$ is created with the private counterpart sk of pk, i.e. $V(\text{pk}, h_T, \sigma) = 1$.
4) The query $Q = (\text{pk}, h_{\text{st}}, h_{\text{tx}}, \sigma)$ is created.
5) US is called to obtain $\pi \leftarrow \text{US}(Q)$.
6) The certified transaction $(T, \sigma, h_{\text{tx}}, d, \pi)$ is formed.

A certified transaction $(T, \sigma, h_{\text{tx}}, d, \pi)$ may then be verified in the state (pk, $h$) by the following procedure: $V_{\text{cert}}(T, \sigma, h_{\text{tx}}, d, \pi; \text{pk}, h)$: If at least one of the following checks fail, return 0, otherwise return 1:

1) $T.h_{\text{st}} = h$;
2) Open$(h_{\text{tx}}, d) = H(T.D)$;
3) $V(\text{pk}, H(h_{\text{st}}, h_{\text{tx}}), \sigma) = 1$;
4) $V(H(\text{pk}, T.h_{\text{st}}), h_{\text{tx}}, \pi) = 1$.

A tuple $(T, \sigma, h_{\text{tx}}, d, \pi)$ is said to be certified in state (pk, $h$) iff $V_{\text{cert}}(T, \sigma, h_{\text{tx}}, d, \pi; \text{pk}, h) = 1$.

Mint Transaction

A mint transaction is the first transaction with every token. The mint transaction assigns a unique *Token Identifier* id and other application-specific data fields as needed or desired, like a *Mint Justification,* packed into the auxiliary data aux.

A certified mint transaction is $(T_0, \sigma_0, \pi_0)$, where $T_0 = (h_{\text{st}}, D_{\text{mint}})$ and $D_{\text{mint}}$ contains the following fields:

- pk': the public key of the first owner;
- id: the token identifier;
- aux: other data of the transaction.

A Mint transaction may be signed by a fixed, public keypair $(pk_{mint}, sk_{mint})$. This ensures the uniqueness of every token identifier, where MINT_SUFFIX is a fixed domain separator.

Certifying a mint transaction $T = (h_{st}, D_{mint})$ may be carried out according to the following steps:

1) $h_{st} = H(id, MINT\_SUFFIX)$ is computed.
2) $h_{tx} = H(D_{mint})$ is computed.
3) $h_T = H(h_{st}, h_{tx})$ is computed.
4) A digital signature $\sigma \leftarrow S(sk_{mint}, h_T)$ is created with the (publicly known, fixed) private key $sk_{mint}$.
5) The request $Q = (pk_{mint}, h_{st}, h_{tx}, \sigma)$ is created.
6) US is called to obtain $\pi \leftarrow US(Q)$.
7) The certified mint transaction $(T, \sigma, \pi)$ is formed.

Verifying a certified mint transaction $(T, \sigma, \pi)$ (with $T = (h_{st}, D_{mint})$) in state $(pk, h)$ may include the following checks:

1) $h_{st} = h$;
2) $h_{tx} = H(D_{mint})$;
3) $V(pk_{mint}, H(h_{st}, h_{tx}), \sigma) = 1$;
4) $V(H(pk_{mint}, h_{st}), h_{tx}, \pi) = 1$.

Application-specific checks (e.g., validation of the mint authorization based on the enclosed mint justification) follow.

Token Ledger

A *token ledger* is a sequence

$$(T_0, \sigma_0, \pi_0; h_{st}^1), (T_1, \sigma_1, h_{tx}^1, d_1, \pi_1; h_{st}^2), \dots, (T_n, \sigma_n, h_{tx}^n, d_n, \pi_n; h_{st}^{n+1})$$

where $(T_0, \sigma_0, \pi_0)$ is a certified mint transaction and for every index $i = 1, ..., n$:

1) $(T_i, \sigma_i, h_{tx}^i, d_i, \pi_i)$ is a certified transaction in the state $(T_{i-1}.D.pk', h_{st}^{i-1})$;
2)

$$h_{st}^i = H(h_{st}^{i-1}, x_{i-1}) \text{ where } x_{i-1} = T_{i-1}.D.x.$$

Security

Consider a token with the state $S = (pk, h_{st})$. The transfer protocol described above ensures the following properties:

- *No blocking:* Only the owner of the private key of pk can block the state $S = (pk, h_{st})$ if it was not blocked before.
- *No double-spending:* Only one certified transaction can be created in the state $S$.

In embodiments of the invention, security against blocking does not depend on the choice of the commitment scheme and security against double spending assumes computational binding of the commitment scheme.

Therefore, both proofs are also valid if the commitment scheme is trivial (i.e. $h_{tx} = H(D) = H(pk', x, aux)$) because the trivial commitment scheme is perfectly (and hence also computationally) binding.

Privacy

The Unicity service 500 obtains information about the transactions $T = (h_{st}, D)$ with tokens via the queries $Q = (pk, h_{st}, h_{tx}, \sigma)$. The system should ensure that the Unicity service 500 does not learn too much about the contents and context of transactions, for example, which transaction belongs to which token.

Assume that a token is currently in the state $(pk, h_{st})$ and the next transaction with the token is $T = (h_{st}, D)$, where $D = (pk', x, aux)$. To certify $T$, the query $Q = (pk, h_{st}, h_{tx}, \sigma)$ is sent to US where $h_{tx} = Com^c(H(D))$ and $\sigma = S(sk; H(h_{st}, h_{tx}))$.

Assume that US 500 stores the query $Q$. In the future, the next transaction $T' = (h'_{st}, D')$ will be executed with the same token and the query $Q' = (\text{pk}', h'_{st}, h_{tx'}, \sigma')$ with $h'_{st} = H(h_{st}, x)$ will be received by US 500.

The Unicity service 500 should not be able to associate $Q$ and $Q'$ as two consecutive transactions with the same token. Such association is possible if the Unicity service 500 somehow obtains the random $x$ included into the transaction $T$, because the Unicity service 500 can then check that $H(h_{st}, x) = h'_{st} = f_{h_{st}}(x)$. There are several ways to find $x$:

- Invert the function $f_{h_{st}}(\cdot) = H(h_{st}, \cdot)$, i.e. find $x'$ such that $f_{h_{st}}(x') = h'_{st}$ and hope that $x' = x$. To prevent that, we may assume that the hash function $H$ is $(k, \ell)$-one-way.

- Find $x$ based on the commitment $h_{tx} = \text{Com}^c(D)$. To prevent that, we may assume that the commitment scheme is computationally hiding.

- Combine both techniques, i.e. invert $f_{h_{st}}(x)$ with additional information about $x$ obtained from $h_{tx}$. To prevent that, we assume that the commitment scheme in use is *perfectly hiding.*

Note that if $\ell$ is large, then $H(h_{st}, x)$ with $x \leftarrow \{0,1\}^\ell$ may give very little information about the previous state hash $h_{st}$. For example, an extreme case is that if $\ell = k$ and the function $H(h, \cdot): \{0,1\}^k \rightarrow \{0,1\}^k$ happens to be one-to-one for every $h$ (which most likely never happens for practical hash functions) then in fact $H(h_{st}, x)$ gives no information on $h_{st}$ because the equation $H(h, x) = h'_{st}$ can be (uniquely) solved for every state hash $h$ that the Unicity service 500 has stored or memorized. In practice, there is no need to choose very large $\ell$ as practical security is possible if $\ell$ is much smaller than $k$.

Key Generation

In the previous discussion, there is an assumption that the recipient agent 20 generates a fresh keypair for every transaction. This may be impractical in some applications, especially where the recipient's secure storage is limited. Two different embodiments provide solutions that allow for the generation of unlinkable public keys while maintaining only a single persistent private key. As a requirement, the system should avoid the persistent state on the client side that must be retained between transactions.

In contrast to other embodiments that are not signature-scheme specific, in this embodiment the Elliptic Curve Digital Signature Algorithm (ECDSA) signature scheme is used. Standard ECDSA and Diffie-Hellman (DH)-specific notation will be used.

Interactive Protocol

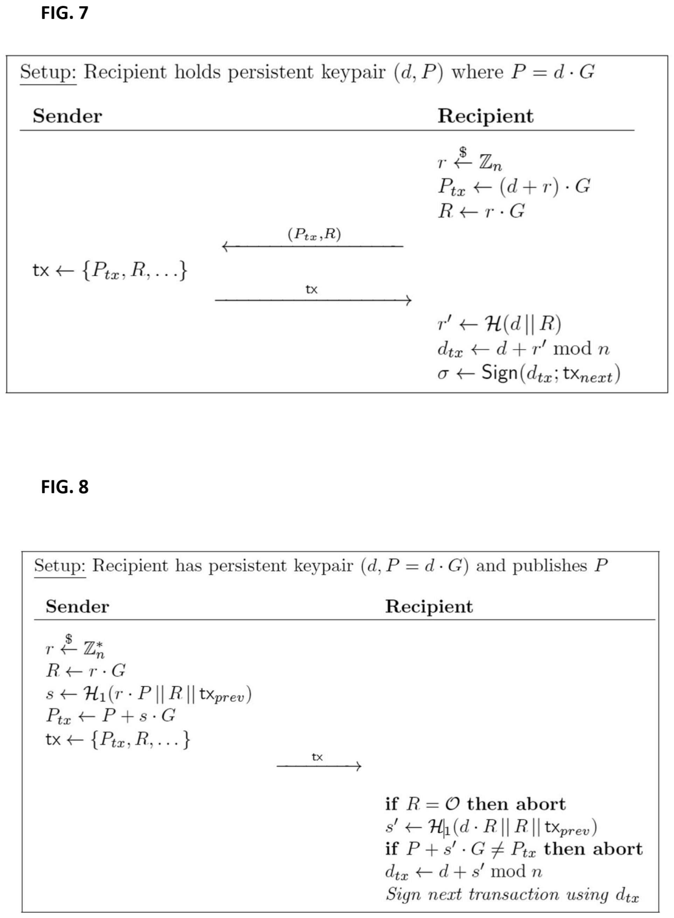

Assume the recipient 20 holds a persistent keypair $(d, P)$ where $P = d \cdot G$ with generator $G$ and order $n$. For each transaction, the recipient then generates an ephemeral blinding factor $r \leftarrow \mathbb{Z}_n$ and derives a transaction-specific public key $P' = (d + r) \cdot G$. The protocol is also shown in Figure 7.

Interactive protocol for generating unlinkable ECDSA public keys.

The recipient maintains only the persistent secret $d$ and derives ephemeral signing keys deterministically from metadata $R$, included in the auxiliary data aux of the transaction. When spending the token, the recipient reconstructs the blinding factor $r' = H(d \parallel R)$ and derives the private key $d' = d + r' \bmod n$ corresponding to $P'$.

Non-Interactive Protocol (Figure 8)

For applications requiring persistent public keys as "addresses", or non-interactive operation, the parties can create the blinded public key using Diffie-Hellman key exchange. The recipient publishes a persistent public key $P = d \cdot G$. The protocol is shown in Figure 7.

The key challenge in non-interactive protocols is protecting against malicious senders who might choose predictable ephemeral keys r or leak them to compromise transaction unlinkability. The secure construction addresses this by binding the blinding factor to both the shared Diffie-Hellman secret and public transaction data. The sender generates an ephemeral keypair $(r, R = r \cdot G)$ and computes a Diffie-Hellman shared secret $r \cdot P$. The blinding factor s is derived by hashing the shared secret together with the ephemeral public key $R$ and the previous transaction identifier $tx_{prev}$:

$$s = \mathcal{H}_1(r \cdot P \parallel R \parallel tx_{prev})$$

The transaction-specific public key is then computed as $P_{tx} = P + s \cdot G,$ and both $P_{tx}$ and $R$ are included in the transaction. Upon receiving the transaction, the recipient:

1) Verifies that $R \neq \mathcal{O}$ (the point at infinity) to prevent trivial attacks
2) Computes the same shared secret $d \cdot R = r \cdot P$ using their persistent private key

3) Derives $s' = \mathcal{H}_1 (d \cdot R \parallel R \parallel tx_{prev})$ and verifies that $P + s' \cdot G = P_{tx}$
4) Computes the transaction-specific private key $d_{tx} = d + s'$ mod $n$ for signing the next transaction

By including both R and $tx_{prev}$ in the hash input, the protocol ensures that:

• Even if the sender chooses a predictable $r,$ the blinding factor $s$ depends on the hash function output and remains unpredictable to external observers

• The recipient can verify that the sender correctly computed $P_{tx}$ without learning $r$

• Each transaction uses a unique blinding factor (assuming $tx_{prev}$ is always unique), preventing linkability even if the sender reuses the same r across different transactions

One can assume that $tx_{prev}$ is always unique, as a malicious sender reusing the exact ($r,$ $tx_{prev}$) pair could break unlinkability. In practice, $tx_{prev}$ can be the hash of the previous transaction or a timestamp with sufficient granularity.

Programmable Locking Conditions

In the previous sections, token ownership transfer was validated using digital signatures - a specific instance of a more general pattern where a predicate determines spending authorization. The invention is not limited to this, however, but rather may be generalized to support arbitrary programmable locking conditions, while maintaining the security properties of the Unicity protocol.

The key insight is that both signature verification and more complex predicates share a common structure: given some public information and a witness, the system can determine whether a spending condition is satisfied. This can be formalized as a locking condition predicate that executes deterministically in a fixed environment.

Token State and Environment

A token maintains mutable state across transactions. Here, a "token state" $\sigma \in \Sigma$ is arbitrary data associated with a token, where $\Sigma$ is the state space. The state can encode ownership information, contract state, or any application-specific data. The "environment" $\varepsilon$ is a structured tuple containing immutable and certified information: $\varepsilon$ = (genesis, certified, chain) where:

• genesis: Genesis parameters including asset ID, token ID, and initial configuration
• certified: Information certified by the Unicity Service, including timestamp/round number and trust base
• chain: The immediately previous transaction in the token's history

A critical property is that $\varepsilon$ must be *deterministic and verifiable*: once the Unicity Service 500 certifies a transaction with environment $\varepsilon$, all subsequent validators must use the same $\varepsilon$ for verification.

Locking Conditions

A locking condition is a deterministic predicate: $\mathcal{L} : \varepsilon \times \Sigma \times W \to \{0,1\} \times \Sigma$ where: $\varepsilon$ is the environment; $\Sigma$ is the current token state; $\mathcal{T}$ is the transaction data: W is the witness (analogous to signature); and the output is a pair (b, $\sigma$') where b $\in \{0,1\}$ indicates success/failure and $\sigma' \in \Sigma$ is the new token state.

Let $\mathcal{L}\,(\varepsilon,\,\sigma,\,T,\,w) = (1,\,\sigma')$ denote that locking condition $\mathcal{L}$ accepts transaction $T$ with witness $w$ in environment $\varepsilon$, producing new state $\sigma'$.

Transaction Structure with Locking Conditions

A transaction in the generalized embodiment has the structure:

$$T = (h_{\mathrm{st}}, D, \mathcal{L}', \sigma')$$

where:

- $h_{\mathrm{st}}$: current state hash (as before)
- $D = (\sigma',\, x,\, \mathrm{aux})$: transaction data containing the new state $\sigma'$, random nonce $x$, and auxiliary data aux
- $\mathcal{L}\,'$: the locking condition for the *next* owner (analogous to recipient's public key)
- $\sigma'$: the new token state

Each token maintains:

- Current locking condition $\mathcal{L}$ (determines who can spend)

- Current state $\sigma$ (mutable contract data)

- State hash $h_{\mathrm{st}} = H(\mathcal{L}\,,\,\sigma,\,\mathrm{prev})$ where prev is the previous state hash

Dual Execution Model

In an embodiment, the locking condition $\mathcal{L}$ is evaluated in *two contexts* with *identical environments:*

1) Certification Phase: The Unicity Service evaluates $\mathcal{L}\,(\varepsilon_{\mathrm{cert}},\,\sigma,\,T,\,w)$ where $\varepsilon_{\mathrm{cert}}$ includes the current round number, timestamp, and trust base at certification time.

2) Validation Phase: Each recipient evaluates $\mathcal{L}\,(\varepsilon_{\mathrm{cert}},\,\sigma,\,T,\,w)$ using the *same* $\varepsilon_{\mathrm{cert}}$ obtained from the certification proof.

This ensures deterministic validation: if the Unicity Service 500 accepts a transaction, all recipients can independently verify the same predicate outcome.

AGGREGATION AND CONSENSUS

Unicity minimizes the volume of on-chain data, based on the observation that shared ("on-chain") state is unavoidable only to prevent double-spending, assuming no centrally controlled, non-transparent technologies such as trusted hardware wallets or Trusted Execution Environments (TEEs) and also that anyone can be a recipient. Unicity also greatly reduces trust requirements, improves user privacy, and provides linear scale.

In a hierarchical trustless system, the principle is that the base layer (e.g., L1 blockchain) provides decentralization, while the layers below it (e.g., rollups) present cryptographic proofs of the correctness of their operation. In scaling Unicity, we have designed efficient data structures to prove the correctness of operation of Proof Aggregation Layer 300 to the Consensus Layer 200. Based on cryptographic hashes alone, the consistency proof grows linearly with respect to the number of user transactions. This imposes a hard limit of approximately 10 000 transactions per second (tx/s), beyond which the networking bandwidth of the Consensus Layer becomes the bottleneck.

To scale further, embodiments of the invention may use cryptographic zero-knowledge proofs (ZKPs) to compress the size of the consistency proofs. As an application of ZKPs, this use-case is fundamentally more efficient than using ZKPs to process the transaction data itself, as is done in many privacy coins and ZK-rollups. To illustrate the efficiency of Unicity, we will now describe how to scale the Proof Aggregation Layer to 10 000 tx/s per *shard.* This figure represents the provable throughput achievable on a single consumer-class computer which, of course, is multiplied many times over as other shards operate in parallel.

Due to the small proof size and efficient verification, the Consensus Layer 200 can support a practically unlimited number of such trustless shards. Table 1 compares different, representative ZKP technologies that also support front-ends ("stacks") and are suitable for compression of non-deletion proofs:

| ZK Stack | Hash Function | Proving Speed (tx/s) | Proof Size | Proof Size Asymptotics | Trusted Setup | Impl. Effort |
|---|---|---|---|---|---|---|
| None ("hash based") | SHA-256 | 10 000* | 10 MB | $O(n)$ | No | N/A |
| CIRCOM + Groth16 | Poseidon | 25 | 250 b | $O(1)$ | Yes | Lower |
| Gnark + Groth16 | Poseidon | 30 | 250 b | $O(1)$ | Yes | Low |
| SP1 zkVM | SHA-256 | 1.5 | 2 MB | $O(\log n)$ | No | Lowest |
| Cairo 0 + STwo | Poseidon | 60† | 2.4 MB | $O(\log n)$ | No | Medium |
| Cairo + STwo | Poseidon | 100 | 2.4 MB | $O(\log n)$ | No | Medium |
| AIR + Plonky3‡ | Poseidon2 | 10000 | 1.7 MB | $O(\log n)$ | No | High |
| AIR + Plonky3 | Poseidon2 | 2500 | 0.7 MB | $O(\log n)$ | No | High |
| AIR + Plonky3 | Blake3 | 250 | 1.7 MB | $O(\log n)$ | No | High |

* bandwidth-limited, no verification effort reduction † Trace generation before proving is impractically slow.

‡ See below for more details

The estimated implementation effort reflects the perceived maturity and learning curve; and the difficulty of producing safe implementations.

To prevent double-spending of tokens, the Unicity Infrastructure permanently (from the perspective of a token, meaning for a duration exceeding the token's lifetime) records a unique identifier for every spent token state. This identifier is the cryptographic hash of the token state data. If a user attempts to double-spend a token, the resulting identifier will be identical to the one already recorded, making it impossible to obtain a new Proof of Unicity. A transaction is considered invalid unless it is accompanied by a valid Proof of Unicity.

The rest of the processing-executing transactions, running smart contracts, etc.-can happen at the client, execution layer 400, executed by users or "agents". Agents are themselves the interested parties in data availability and transaction validation, and they choose the ordering of incoming messages for processing. Thus, the Unicity Infrastructure is relieved of these duties, removing a major scaling bottleneck of traditional L1 blockchains.

The Unicity infrastructure operates in a trust-minimized way preferably by utilizing distributed authenticated data structures and cryptographic zero-knowledge tools (SNARKs) for extra succinctness of messages and tokens. The Proof of Unicity is a fresh proof of inclusion $\pi_{inc}$- and inclusion proof of the token state being spent. This proof can be efficiently generated based on a Merkle Tree data structure. The proof size is logarithmic with respect to the tree's capacity, making it highly efficient. If the root of the tree is securely fixed, the integrity of the rest of the tree can be verified trustlessly: it is computationally infeasible to generate a valid inclusion proof for an element not present in the tree, without changing the root, or breaking underlying cryptographic assumptions.

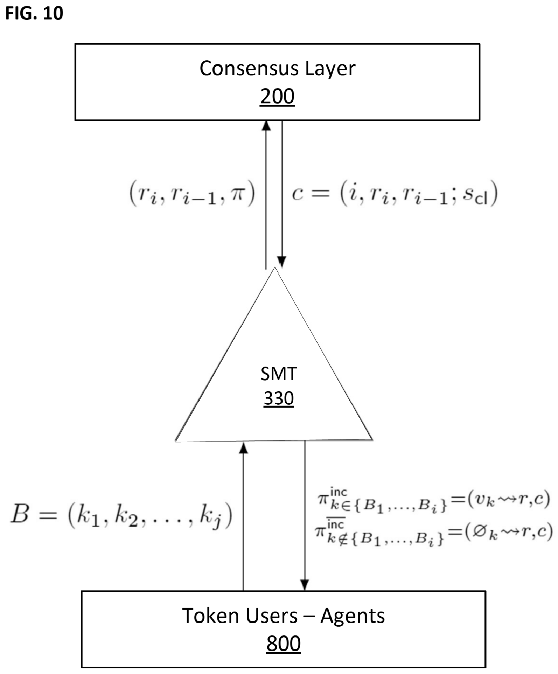

The infrastructure may also, or instead, use *non-inclusion* proofs, making it possible to prove to other parties that a particular token state has *not* yet been spent. The Unicity infrastructure thus may operate as a large-scale, distributed Sparse Merkle Tree (SMT) 330 (see Figure 10). Specifically, the tree may be implemented as an indexed variant with some optimizations. In this disclosure, without limitation or loss of generality, the distributed tree will be presented as an SMT. Furthermore, an SMT is straightforward to shard, which is one alternative for implementing it: the tree is partitionable vertically into slices. Leaves remain at their deterministically computed positions, as an SMT is an indexed data structure. Each leaf's identifier encodes its address in the tree, and the leaf's shard address is a prefix of the identifier.

The Proof Aggregation Layer 300 connects and communicates with the Consensus Layer 200. For fully trustless operation, each request is preferably accompanied by a cryptographic proof of SMT consistency.

Consensus Layer

Decentralization is achieved by a Proof-of-Work (PoW) blockchain instance 602 within the consensus layer 200, which manages consensus, including the validator selection to determine the BFT finality, to handle validator incentives, etc. PoW is specifically robust during the bootstrapping of a decentralized system: when the number of validators fluctuates, the financial value of tokens is low, and token distribution is relatively concentrated. PoW shows great liveness properties. At the same time, PoW chains do not provide fast and deterministic finality: many blocks of confirmations are needed to achieve a reasonable level of certainty. In Unicity, this is mitigated by including a fast-running BFT "finality gadget" 220 within the Consensus Layer 200, and the finality of transactions below is defined by the consensus of the BFT cluster.

The PoW layer 600 provides permissionlessness, a core property of decentralized blockchains. Any validator can actively participate in mining, and blocks may be chosen based on the longest-chain rule. By selecting a PoW mining puzzle that is resistant to acceleration by GPUs and ASICs (specifically: RandomX ), Unicity may further democratize the participation in the network.

PoW chains encounter rollbacks ("reorgs") when alternative chains with a greater cumulative PoW work emerge. Limiting the maximum length of alternative chains creates the risk of involuntary forking-both alternative chains may be too long for a rollback. This risk is specifically mitigated by the finality gadget. On the other hand, PoW chains are extremely robust. If any number of validators leave or join the network, the chain continues to grow, and the block rate eventually adjusts to the new total mining power. In short, PoW trades liveness for safety.

The purpose of BFT consensus layer is twofold: 1) to provide deterministic (one-block) finality for the layers below, and 2) to achieve a fast and predictable block rate. BFT consensus trades liveness for safety: it is more fragile, as its liveness depends on a supermajority (e.g., two thirds) of validators being online and cooperative at any moment.

The usual way to achieve permissionless BFT consensus is to use a Proof-of-Stake (PoS) setup. This can be delicate, especially during the launch of a blockchain protocol: there are known weaknesses like "nothing at stake attack", and risk of centralization. PoW-based protocols (and longest-chain-rule protocols in general) are more robust and well-suited for achieving a wide initial token distribution and establishing token value for effective decentralization.

By combining a PoW chain with a BFT consensus layer, Unicity leverages the desirable properties of both mechanisms. The PoW chain provides decentralization, robustness, and high security for the base currency, while the BFT layer provides fast, deterministic finality for the Proof Aggregation Layer 300.

In Unicity, the Consensus Layer 200 may operate at a much higher block rate than the PoW chain. Validators for the Consensus Layer may be selected infrequently from a pool of recent, high-performing PoW miners, based on a deterministic algorithm and PoW chain content; anyone can execute the algorithm to verify the selection. PoW validators may also delegate their BFT layer validation rights.

Consensus Layer validators receive their block rewards at the ends of epochs. It is possible to increase economic security by implementing slashing based on withheld PoW and Consensus Layer block rewards.

Consensus Roadmap

The introduction of economic security mechanisms is a logical step toward evolving the Consensus Layer into a full Proof-of-Stake (PoS) system, once the chain is stable and token distribution reasonably diversified. A PoS system would provide stronger economic security for the BFT nodes while being more energy-efficient and environmentally responsible than PoW mining. Either PoW and PoS systems may be used in embodiments of the invention.

The switch to PoS would include the following steps: 1) introducing the staking mechanism to create economic security for the Consensus Layer 200, 2) implementing an alternative ledger for a native token securing and decentralizing the system, and executing any chosen tokenomics plan there, 3) selecting BFT validators based on the stake, 4) adjusting incentives (block rewards, optional slashing), 5) migrating the token balances, and 5) sunsetting the PoW chain.

Proof Aggregation Layer 300

The Proof Aggregation Layer implements a global, append-only key-value store that immutably records every spent token state. More specifically, it provides the following services: 1) recording of key-value tuples where the key identifies a token state and value is recording some meta-data, 2) returning inclusion proofs of keys, 3) returning non-inclusion proofs of keys not present in the store. Users send requests, which result in new leaf insertions. The Proof Aggregation Layer 300 gets its state summary, covering all previously inserted leaves, certified by the Consensus Layer 200, and generates inclusion and non-inclusion proofs about individual leaves, uses the latest certificate from the Consensus Layer, and sends its 'consistency proof' back to the Consensus Layer.

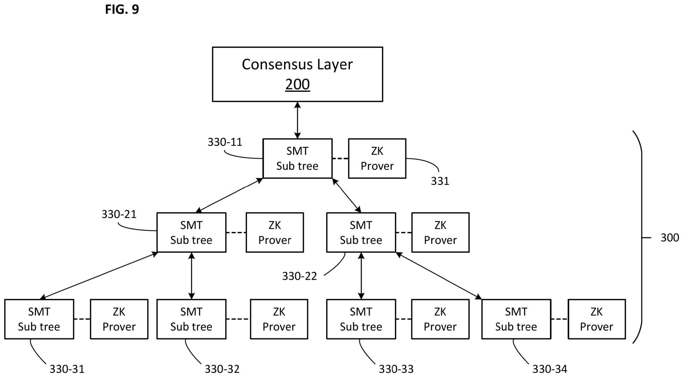

The Proof Aggregation Layer 300 preferably periodically has its state authenticator certified by the Consensus Layer 200. Furthermore, as illustrated in Figure 9, the Proof Aggregation Layer 300 is preferably sharded based on keyspace slices and can be made hierarchical. In other words, keys, which are digital "numbers", can be distributed iteratively downward for processing by a hierarchy of SMT sub trees 330-ij, where i indicates the "level" from the "top" and j indicates the position "horizontally" in the tree, each preferably associated with or communicating with a respective zero-knowledge prover/validator 331 (only one of each is labeled in the figure, to avoid clutter). "Lower level" SMT sub-trees thus may correspond to progressively smaller, non-overlapping ranges of keys.

Proof of Non-Deletion

Once a key is set in the Proof Aggregation Layer 300 (for example in the corresponding SMT sub-tree 330-ij), it has to remain there forever. Every state change of the Proof Aggregation Layer (or a slice thereof) is accompanied by a cryptographic proof establishing that pre-existing keys have not been removed or their values altered -- only new keys were added. The size of this proof is logarithmic with respect to the tree's capacity and linear with respect to the size of the inclusion batch. This can be reduced to a constant size using a SNARK (Succinct Non-Interactive ARguments of Knowledge), which is a known technique. Assuming correct validation of the non-deletion proof and chaining of the Proof Aggregation Layer's state roots by the Consensus Layer, the Proof Aggregation Layer can be considered trustless.

Security Model of the Proof Aggregation Layer 300

The Proof Aggregation Layer 300 implements a distributed, authenticated, append-only dictionary data structure. It authenticates incoming state transfer certification requests by verifying that the sender possesses the private key corresponding to the public key that identifies the current token owner. The invention does not require any particular authentication protocol, many of which are known and may be used.

An append-only accumulator operates in batches $B = (k_1, k_2, ..., k_j)$, accepting new keys. The append-only accumulator is consistent, if 1) during the insertion of a batch of updates, no existing element was deleted or modified; 2) it is possible to generate inclusion proofs $\pi^{inc}_{k \in \{B_1,...,B_i\}} = (v_k \rightsquigarrow r, c)$ for all previously inserted elements, but not for non-existent elements; 3) it is possible to generate non-inclusion proofs $\pi^{\overline{inc}}_{k \notin \{B_1,...,B_i\}} = (\varnothing_k \rightsquigarrow r, c)$ for all elements not so far inserted to the accumulator, and not for those already inserted.

When instantiated as a Sparse Merkle Tree (SMT) 330, then $v_k \rightsquigarrow r$ is the hash chain from the value at k-th position to root c, and $\varnothing_k \rightsquigarrow r$ denotes the hash chain from the "empty" value at k-th position to root c.

After each batch of additions, the new root of the Proof Aggregation Layer's SMT is certified by the BFT finality gadget 220, ensuring its uniqueness and immutability. This provides a secure trust anchor for all consistency, inclusion, and non-inclusion proofs.

An idealized model of the Consensus Layer may be represented by the following pseudo-code, in which it is modeled as an oracle:

```
function INITIALIZE()
    r_ ← ⊥
    i ← 0
end function
function CERTIFICATIONREQUEST(r_i, r_{i-1}, π)
    if (r_{i-1} ≠ r_) ∨ ¬VALID(π, r_i, r_{i-1}) then
        return ⊥
    end if
    r_ ← r_i
    i ← i + 1
    s_cl ← sig_cl(i, r_i, r_{i-1})
    return c = (i | r_i, r_{i-1}; s_cl)
end function
```

For efficiency reasons, client requests are preferably processed in batches; the SMT tree is re-calculated and the tree root is certified when a batch is closed. A batch of client requests is denoted as $B_i$. At the end of each batch, the Proof Aggregation Layer 300 produces its summary root hash $r_i$ and sends it to the Consensus Layer 200 for certification. A certification request $(r_i, r_{i-1}, \pi)$ includes: 1) the previous state root hash, 2) the new state root hash, 3) a consistency proof of the changes made during the batch, and 4) an authenticator that identifies the operator.

The Consensus Layer 200 certifies the request only if it uniquely *extends* a previously certified state root and the consistency proof is valid. It returns a certificate $c = (i, r_i, r_{i-1}; s_{cl})$, where $s_{cl}$ is a signature from the Consensus Layer (e.g., a threshold signature from the consensus nodes or a proof of inclusion in a finalized block).

Each state can be extended only once, which prevents forks within the Proof Aggregation Layer. Each subsequent round extends the most recently certified state.

The SMT 330 provides users with inclusion and non-inclusion proofs. Each proof is anchored to a state root certified by the Consensus Layer.

The Consensus Layer must guarantee data availability. If recent state roots were lost, it would become impossible to reject duplicate state transition requests, potentially allowing malicious actors to double-spend against an old, un-extendable state. The Proof Aggregation Layer itself does not require an internal consensus mechanism; protocols like Raft could be used for replication and coordination among its redundant nodes. The decentralized consensus is provided by the external Consensus Layer.

If each state transition is accompanied by a cryptographic proof of non-deletion (see above), the Proof Aggregation Layer can be considered trustless.

"Maximalist" Security Assumptions

Assume that users are capable of validating all aspects of system operation that are relevant to their own assets. The Root of Trust may then be the PoW blockchain 602. A "maximalist" user maintains a full node of this chain. This is relatively lightweight, as the "utility" transactions are executed at the Execution Layer 400. Upon receiving a token, the user must be able to efficiently verify the following:

1) The token is valid (as elaborated elsewhere),
2) The Proof Aggregation Layer has not forked,
3) The Proof Aggregation Layer has not certified conflicting states of the same token.

The second point may be addressed by validating a unique state root snapshot embedded in the PoW block header. Since the cumulative state snapshot appears with a delay, the block can only be considered final after a snapshot publishing and block confirmation period; hence, maximalist verification is not instantaneous.

The third point is addressed by auditing the operation of the Proof Aggregation Layer-specifically, ensuring that no Inclusion Proofs have been generated for the token that are not reflected in its recorded history. To achieve this, all non-deletion proofs from the token's genesis up to its current state must be validated. This is made efficient through the use of recursive zero-knowledge proofs (ZKPs), which show that each round's non-deletion proof is valid and that no rounds were skipped from verification. These recursive proofs are generated periodically and are made available with some latency. The proofs of non-deletion may also be generated based on entries from a most recent checkpoint, demonstrating that all insertions from a previous checkpoint to the most recent checkpoint did not delete or modify existing entries.

Practical Security Assumptions

In many cases, it is safe to assume that a majority of BFT consensus nodes exhibit economically rational behavior and do not collude maliciously with the Proof Aggregation Layer. In these cases, the user can enjoy significantly more practical operational parameters. BFT layer forking (case 2 above) or certifying conflicting states (case 3 above) produces strong cryptographic evidence which is processed out of the critical path of serving users.

In this scenario, a transaction is finalized, and an inclusion proof is returned within a few seconds, allowing the transaction to be independently verified-without consulting external data (previously obtained Root of Trust is used to validate future transactions) within the same timeframe. The Root of Trust is the set of epoch change records of the BFT consensus layer. These records will in most implementations grow slowly (few aggregated signatures per week). When transitioning to proof-of-stake (PoS) consensus the Root of Trust may remain the same.

Non-deletion Proof

A non-deletion proof is a cryptographic construction that validates one round of operation of the append-only accumulator.

Let the $i$-th batch of insertions be $B_i = (k_1, k_2, ..., k_j)$, where $k$ is an inserted item; all insertions are applied within a single operational round. The root hash before the round is $r_{i-1}$, and after the round is $r_i$. The accumulator may then be implemented as a Sparse Merkle Tree (SMT).

The non-deletion proof generation for batch $B_i$ works as follows:

1) The new leaves in batch $B_i$ are inserted into the SMT.

2) For each newly inserted leaf, the sibling nodes on the path from the leaf to the root are collected. Siblings present or computable from other leaves in the batch are discarded. Siblings can be further organized by dividing them into layers, for more efficient verification. We denote the set as $\pi_i$.

3) Record $(B_i, r_{i-1}, r_i, \pi_i)$.

Proof verification may then proceed as follows:

1) Verify the authenticity of the state roots $r_{i-1}$ and $r_i$ (e.g., by checking their certification by the Consensus Layer).

2) Build an incomplete SMT tree: for each item in $B_i$, insert the value of an empty leaf at the appropriate position.

3) All non-computable siblings needed to compute the root are available in $\pi_i$. Compute the root, compare with $r_{i-1}$; if not equal then the proof is not valid.

4) Build again an incomplete SMT tree; for each item in $B_i$, insert the value of the key into the appropriate position.

5) Compute the root based on siblings in $\pi_i$. If the root is not equal to $r_i$ then the proof is not valid.

6) The proof is valid if the checks above passed.

A valid proof demonstrates that, given authentic roots $r_{i-1}$ and $r_i$, the keys in $B_i$ corresponded to empty leaves prior to the update, and that after the update, the values in $B_i$ were recorded at the positions defined by their respective keys, and there were no other changes.

Due to the sparseness of the SMT one can further improve the encoding, for example, instead of checking if a node's sibling is the next item in layer's nodes or the next item in proof array or empty element otherwise, the system may just record a number - how many of the next siblings are empty elements (frequent close to the leaves when SMT is sparsely populated); and same with siblings (frequent close to the root).

(ZK)-SNARKs

By using an appropriate cryptographic SNARK system, the size of the non-deletion proof can be reduced to a constant.

The statement to be proven in zero-knowledge is the correct execution of the non-deletion proof verification algorithm described in the previous section. The public inputs to the proof (the instance) are the pre- and post-update roots $(r_{i-1}, r_i)$. The private input (the witness) $\omega$ is the insertion batch $B_i$ and the set of sibling nodes (proof) $\pi_i$. While ZK-SNARKs can hide the witness, this zero-knowledge property is not a requirement for this embodiment of the invention, which benefits mostly from the proof's succinctness.

Circuit-Based SNARK)

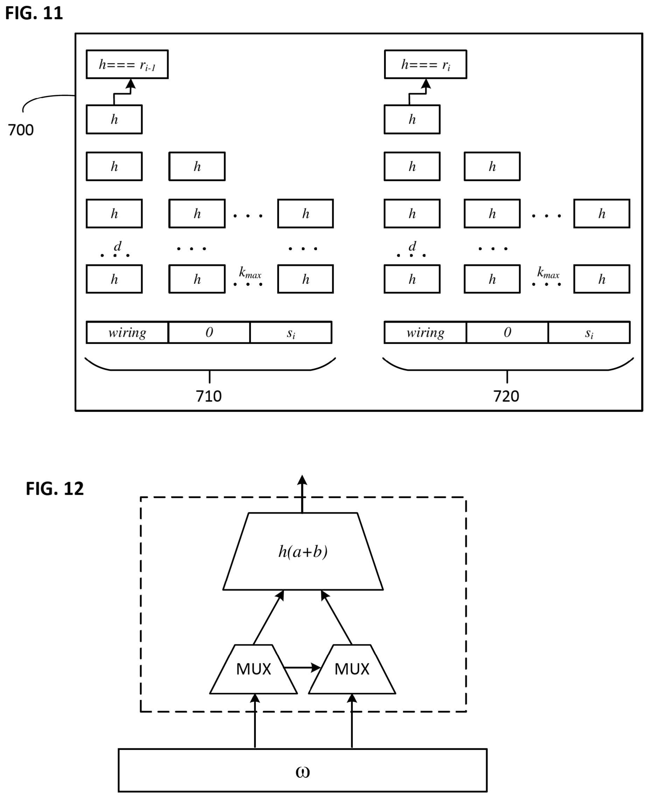

Some embodiments may implement the SNARK functionality using zero-knowledge (ZK) circuits, which are sometimes called "arithmetic circuits" or "constraint systems". These are instructions, that is, software constructs, that check for correctness. Due to the limited expressivity of an arithmetic circuit (e.g., no data-dependent loops or real branching), however, the entire computation flow must be fixed at circuit-creation time. It is therefore helpful to preprocess the inputs to create a fixed execution trace. Figure 11 depicts a representation of the main components of such a circuit 700.
This pre-processing generates a "wiring" signal, which is supplied as part of the witness. This signal dictates the data flow between the hashing units within the circuit.
To preprocess the proof:

- The hash forest, which includes the proof's sibling nodes and the new batch leaves, is flattened.
- The nodes are sorted first by layer (from leaves to root) and then lexicographically within each layer.
- A wiring signal is generated to control the multiplexers (MUXes) at the input of each hashing unit in the circuit.

Let the maximum batch size be $k_{max}$ and the SMT depth be $d$. Since the arithmetic circuit is static, it must be designed to accommodate the maximum possible batch size, $k_{max}$.
The circuit 700 has two halves 710, 720, both controlled by the same wiring signal. It is critical to security that the control signal and the proof are the same for both halves. The first half of the circuit computes the pre-update root by treating all leaves in the insertion batch as zero (the value of empty leaf). The second half computes the post-update root using the actual values from the batch. The number of hashing units in each half of the circuit is approximately $O(k_{max} \cdot d)$.
Each hashing unit takes its inputs either from the outputs of the previous layer's units or from the set of sibling nodes provided in the proof. The pre-processing step encodes the positions of batch and proof elements into these control signals, which are then supplied as part of the witness.
Each hashing cell $h$ in the circuit 700, as depicted in Figure 11, is a template consisting of two input multiplexers and one 2-to-1 compressing hash function. Figure 12 depicts one such hashing cell. Note, however, that the illustrated components, such as the "multiplexers" MUX are not hardware but rather that the illustration uses these symbols to represent the functions performed in the ZK-circuit and as such Figure 12 illustrates function.

The MUX inputs for the leaf layer of the first half are connected to a vector containing:

- The "empty" leaf value (0).

- All new leaves in the batch, which are mapped to "empty" (0).

- The "proof" or sibling hashes $(\pi_i)$.

The MUX inputs for the leaf layer of the second half are connected to a vector containing:

- The "empty" leaf value (0).

- The batch of new leaves ($I$).

- The identical "proof" or sibling hashes $(\pi_i)$.

The MUXes for internal layers are connected to a vector containing:

- The "empty" leaf value (0).

- Output hashes from the previous layer's cells.

- The "proof" or sibling hashes $(\pi_i)$.

Both halves' MUXes are controlled by the same wiring signal.

Execution Trace-Based STARK

An alternative to a bespoke arithmetic circuit 700 is to use a general-purpose zero-knowledge virtual machine (zkVM). In this approach, the verification logic may be written as a traditional imperative program (e.g., in Rust). The zkVM then generates a proof of correct execution for that program.

As described above, zero-knowledge proof systems offer a powerful method for creating succinct proofs of performing some computation, which, in embodiments of this invention, involve checking consistency proofs of a distributed cryptographic data structure. For use cases with small changesets, a simple hash-based proof, whose size is linear in the batch size, is optimal. However, as batch sizes increase and bandwidth becomes a constraint, the constant or near-constant size proofs generated by ZK systems become more advantageous.

Different proof systems offer different trade-offs. The properties are: proving effort, necessity of trusted setup, generality of trusted setup, interactivity, proof recursion-friendliness, and of course properties like availability of tooling, maturity, trustworthiness. Some, like STARKs, are relatively fast to prove but have relatively large proofs; and avoid

undesirable properties such as trusted setup. Others, like Groth16, produce small proofs but require more proving effort and a circuit-specific trusted setup. For more complex applications, hybrid approaches and proof recursion can be employed. Skilled designers and programmers in the field of cryptographic systems will know which proof system is optimal for their specific implementation needs.

AGENTS 800

As mentioned above, the Execution Layer 400 - which may also be referred to as the Agent Layer 400 -- involves cooperating, verifiable, off-chain agents 800. The Execution Layer 400 provides APIs for agent development, agent-to-agent communication and interfacing with the rest of the Unicity infrastructure for proof generation. Unicity agents are encapsulations of verifiably unique code and state, e.g., a fungible currency token, an NFT, a smart contract, a game NPC, an AI, etc., or any combination thereof. Agent instances execute off chain and request Unicity proofs when needed to prove unique state histories.

An "Agent" is an encapsulation of code and state that receives inputs from an external environment, executes its code and updates its state and code accordingly. An "Agent instance" is an instantiation of an agent in an execution environment; multiple execution environments can share the same agent by synchronizing their agent instances.

As a summary definition of a "token" (see also above) is an encapsulation of data that has semantic value. Without limitation, an example of how agents operate in Unicity will be given below in which the token is an non-fungible token (NFT). This example will highlight the Unicity approach by comparing the operations involved in transferring an NFT in Ethereum and Unicity. We will assume two users, Alice and Bob. Alice currently owns an NFT and wishes to transfer it to Bob.

In Ethereum, the NFT exists inside an ERC721 smart contract, executed by the Ethereum virtual machine (EVM), the execution environment on the Ethereum blockchain.

In Unicity, in contrast, the NFT exists inside an agent, instances of which execute locally in their own execution environments (on Alice's laptop or mobile device, in the cloud, at the edge or all of the above, simultaneously). Unlike Ethereum ERC721, each NFT in Unicity is implemented by its own agent. A separate agent may act as minting agent, spawning NFT agents.

In the Ethereum model, Alice will send a transaction order to the blockchain network, which will be received by validators, added to a block proposal and then broadcast to the other validators in the network. Alice and Bob can then verify that the transfer took place by checking that the blockchain includes the transaction.

In the Unicity model, Alice will send a transaction order to the agent instance in her execution environment that stores the NFT. The agent instance will then execute the transaction order, request a unicity proof from the Unicity infrastructure and synchronize with a new agent instance instantiated in Bob's execution environment. At this point there are identical agent instances in both Alice and Bob's environments. Once synchronized, the agent instance in Bob's execution environment will verify both the Unicity proof (verifying that there are no forks, i.e., Alice is not trying to double spend) as well as the integrity of computation. This may be done simply by rerunning the agent code or verifying a ZK proof.

At this point the agent instances can only accept transaction orders from Bob to further transfer the NFT. Alice may choose to delete or archive the agent instance that processed the transaction as it can serve no purpose going forward for her. Having multiple copies may of course be useful for censorship resistance or fault tolerance depending on the application.

The major difference in models is the parallelization of compute - in Unicity, there may be an unlimited number of agents, all interacting with each other or external parties, and they do not compete for resources on the blockchain. In Unicity, the blockchain still plays a role as the trust anchor but does not need to play a direct role in execution.

State transitions

The definition of a state transition will generally be agent-specific and could be anything from a cryptocurrency transaction, a token mint or player-to-player or agent-to-agent interaction in a multi-player game. In this simple NFT example we use the most basic configuration possible for the purposes of explanatory clarity.

Depending on the application, agents may make use of predicates to change their ownership, code or data. Predicates are functions that return a single True or False, used to check if an input meets certain conditions. Predicates are used in agents to enable customization and programmability. For example, an *owner* predicate may be the function that allows or prohibits updating the ownership of an agent. The most basic form of an *owner* predicate would be the verification of a digital signature, i.e., in order to transfer ownership, the order needs to be signed by a private key that matches the public key stored as part of the predicate.

As other possible predicates, a *data update* predicate could be used to update the data field of an agent, a *spawn* predicate allows an agent to create new agents and a *split* predicate could allow an agent to subdivide into multiple agents which split characteristics of the parent agent (for example an agent that stores a fungible token), such as determining how state is to be partitioned among the resulting agents.

Assume that the current state of the NFT agent comprises:

- Alice's address, linked to her public key;
- an agent ID, created at genesis;
- data, which in the case of an NFT could be an image or a link to an image;
- the owner predicate (the unlocking condition), i.e., only Alice can unlock the owner predicate and transfer ownership.

Similar to standards such as ERC721, the genesis state and allowable state changes are preferably standardized and encoded in the logic of the agent.

Current State and State Transition

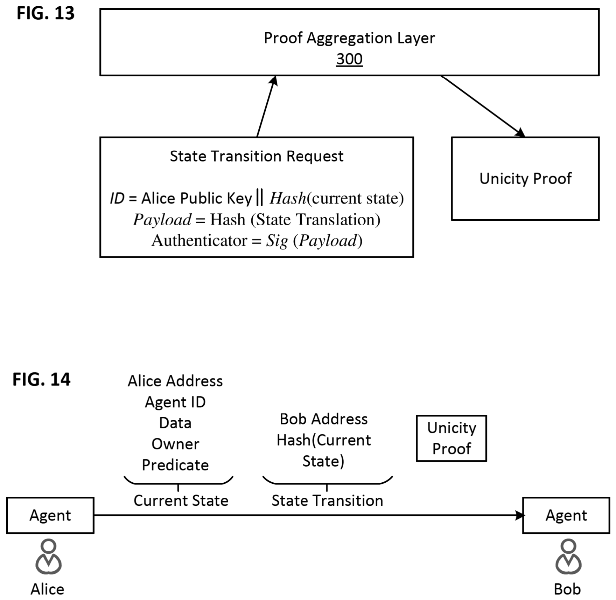

See Figures 12 and 13. The first step in the transfer of the NFT to Bob is for Alice to create a state transition, which comprises the hash of the current state and Bob's address. The second step is for Alice to generate a state transition request, an example, of which may be a tuple {*RequestID, Payload, Authenticator*}, where:

- *RequestID* is the address of Alice concatenated with the hash of the current state.
- *Payload* is the hash of the state transition.
- *Authenticator* is the digital signature on the payload, signed using Alice's private key.

The state transition request is then sent to the Unicity infrastructure where a leaf node is added to the SMT at the address defined by the *RequestID* and content equal to the {*Payload, Authenticator*} pair.

Alice's agent instance will then synchronize its state with Bob's agent instance. To verify that Bob is the new owner, Bob's agent instance checks that the state transition is valid and that the Unicity proof verifies that the state transition is unique. The leaf address of the SMT (the *RequestID*) is defined by the current state and Alice's public key only. Any attempt to double spend would require the generation of an identical leaf node address for which it would be impossible to create a Unicity proof.

Programmability and composability

The agent model used in Unicity can be extended to include composition, namely different types of agents updating the state of other agents, the splitting of agents, and agents that spawn other agents. An example of spawning would be an NFT mint agent which is enabled to spawn new NFT agents (mint new NFTs) based on pre-defined conditions. The example of splitting would be agents that are holding state representing some fungible value. If fungibility is allowed as part of the application then an agent may split the NFT, with the splits each holding parts of the overall value. The rules of that application then determine how the split should occur, and may implemented in its code using known techniques.

An important observation is that, in Unicity, settlement can be local, i.e., the agents do not depend on the state of other agents to execute. All agents are independent and execute locally in their own environments without having to refer to the state of other agents. This is in contrast to smart contract platforms such as Ethereum in which smart contracts have full access to other smart contracts' state, as all code and state exists within the memory of a single instance of the Ethereum virtual machine.

Use Cases

The Unicity infrastructure is advantageous in a wide variety of fields. Below are given just a few examples, such as for programmable digital currency, decentralized finance, decentralized gaming, and decentralized artificial intelligence (AI).

Programmable Digital Currency

Suppose Alice is the owner of an "Alpha" coin whose ownership is recorded in an immutable ledger, which may be sharded into sub-ledgers. The Alpha coin may, for example, be generated through Proof of Work in the Consensus Layer. In order to use it like cash, the first step is for her to transfer the coin to a specified transfer or burn address in the Alpha ledger. Alice then creates a new agent with a genesis state defined by the transaction ID of the burn transaction in the Alpha ledger. The agent's genesis state includes this transaction ID, the Alpha coin sub-ledger, and the genesis ownership predicate. The genesis owner predicate must match the send address in the ultimate transaction in the Alpha coin sub-ledger, i.e., only the private key that initiated the burn transaction can execute a transfer.

The reason for including the Alpha coin sub-ledger is local verifiability. If a recipient had access to a full node of the PoW blockchain, he would have the full history and be able to verify the transaction integrity himself. However, this is quite restrictive and would limit the choices for execution environments. By including the coin sub-ledger, a recipient simply needs the genesis block of the PoW blockchain to independently verify the integrity of the coin sub-ledger. The analogy with physical cash is relevant. When someone hands over cash, the recipient does not need to verify the integrity of every transaction in history to know that the cash is valid. In other words, Unicity agents share the same property of physical cash that verification and settlement happen locally.

When Alice wishes to initiate a transfer, she will create a state transition and a state transition request similar to the NFT example above. In this case the token is fungible, which means that for a transfer less than the value of the coin the agent will split into two agents, one with the value of the transfer and the other with the value of the remainder.

Bob's agent will verify the integrity of the Alpha coin sub-ledger (verifying the burn transaction) as well as the integrity of the state transition and the Unicity Proof. At this point only Bob's agent can execute a transaction order, i.e., Bob is now under full control of the agent and therefore the underlying value of the coin.

Decentralized finance

There are two compelling reasons for decentralized finance (DeFi). For individuals, the appeal is freedom-the elimination of intermediaries, allowing direct engagement in financial transactions without relying on centralized entities such as banks or payment processors. This provides greater financial autonomy and protection against authoritarian government censorship, ensuring the freedom to transact and access financial services without external control or intervention. For institutions, incorporating elements of DeFi can enhance security and automation by eliminating the need for human oversight. Processes can be streamlined, operational costs reduced, and risks associated with human error or fraud mitigated, while enforcing regulatory compliance at the code level. Whilst these are two very different perspectives, it is clear that DeFi has the potential to revolutionize financial services, driving innovation and empowerment at both the individual and institutional levels.

While significant progress has been made in productizing DeFi and improving the user experience, much work remains. Just as no one is currently running Call of Duty or fully self-driving software in a smart contract today, no one is operating the New York Stock Exchange (NYSE) on a smart contract either. The agent-based approach of Unicity offers a potential path forward by breaking down the components of an exchange into independent agents that execute off-chain in parallel.

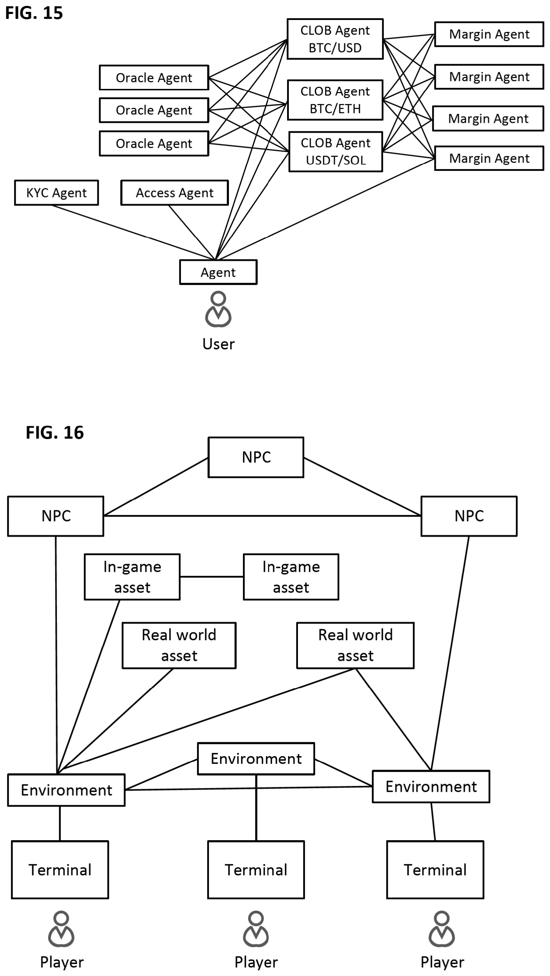

Figure 15 shows a simplistic view of a decentralized exchange built using a set of interacting agents. The core agents are the Central Limit Order Book (CLOB) agents which manage individual trading pairs. By way of example only, the depicted trades involve BTC/USD (Bitcoin - U.S. Dollar), BTC/ETH (Bitcoin - Ethereum), and USDT/SOL (Tether - Solana). Depending on requirements, these can be deployed and replicated on consumer laptops for a fully permissionless, censorship-resistant network, or operating in high-powered servers in high-availability data centers. From a functional perspective, the end result is the same: Individual agents execute in parallel, and synchronize state in a fully transparent, verifiable and autonomous way. Other agents provide Know Your Customer (KYC) access, margin management (via Margin Agents), act as price oracles and provide any other functionality that is required to operate the exchange.

Decentralized gaming

Although blockchain technology has been proposed as a means of enhancing transparency and facilitating value exchange in gaming, its current application has largely been limited to asset tokenization within centralized game architectures. Due to the limitations of existing designs, using blockchain for actual game execution remains impractical. However, the potential benefits of decentralized gaming are clear: players can gain true ownership of interoperable assets across different games, enjoy transparency and community-driven governance, experience censorship resistance, unlock innovative business models like play-to-earn and support fair reward systems for creators.

Unicity is uniquely suited to solve a well-known problem in the gaming industry: The industry has, to a large degree, converged on a client-server approach, and while the accepted view is that although pure client-side execution of multi-player games is technically possible, it's considered impractical due to issues of security and synchronization. However, the client-server approach is itself severely limited as it is technically challenging to have many players interact in real-time on the same server instance. Modern simulations are limited to a few hundred players interacting in the same shared world due to this limitation.

Unicity overcomes these limitations and can provide a truly decentralized game engine for massive online multi-player immersive simulations. In this case decentralization is not a "nice to have" but an essential requirement to allow complex multi-player interactions with potentially millions of players all interacting online. Moving execution to the client side allows the system to scale, with blockchain technology providing a security layer that guarantees honest gameplay.

See Figure 16, which depicts a three-player simulation. A user will initialize the game environment and interact with a set of agents that execute the game mechanics such as NPCs (Non-Player Characters), real-world assets and in-game assets. As users interact with the virtual world and approach other players, the players' agents will synchronize with each other with verifiable state transitions proving that the game logic has been followed and enabling game synchronization and exchange of assets.

In the event of a failed verification, action can be taken as defined by the game logic, such as rewinding the game to the previous known good state. In this way, a completely new type of game engine can be built with the game components consisting of either autonomous agents, managing game logic, and semi-autonomous agents operating on behalf of the player, and interacting with the environment and other players.

Decentralized AI

The pace of AI advancement in recent years has been nothing short of breathtaking. This rapid progress, while promising to accelerate further, also raises significant concerns about risks and potential unintended consequences of unchecked AI development. As AI systems become more sophisticated and autonomous, there is an urgent need to implement robust guardrails to ensure these powerful technologies remain aligned with human values and societal well-being. However, a world increasingly reliant on AI's probabilistic and often unexplainable models, as opposed to deterministic processes, makes it extremely challenging to implement these guardrails and verify alignment with society's goals and values.

Blockchain technology has been proposed as a means to build transparent and immutable AI systems. However, due to the limited processing power, high latency and costly nature of on-chain operations, it is impractical to execute complex AI models directly on-chain. The size of AI models far exceeds the storage capabilities of most blockchain platforms, and the slow transaction speeds along with high costs make real-time AI decision-making virtually impossible in a purely on-chain environment. Unicity overcomes these obstacles to the convergence of AI and blockchain technology. Execution may occur at native speed *off-chain* in AI agents' local environments but with the same security guarantees as if agents were executing on-chain. The Unicity platform enables the building of verifiable AI systems that allow human operators and agents to interact through trustless state verification, deterministically verifying that execution has been carried out in accordance with agreed rules, and taking action when they do not.

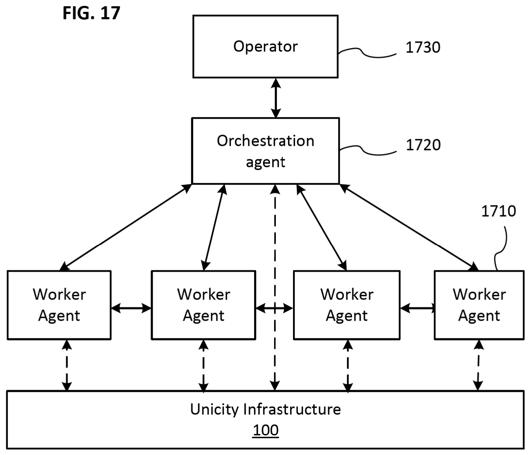

Figure 17 illustrates how AI agents may coordinate on a task through trustless state verification. When combined with a native currency as a means to reward agents based on their performance, contributions, or desired behavior, Unicity may be used to provide a fully secure and verifiable decentralized AI ecosystem. AI agents (Worker Agents 1710, whose tasks are coordinated by an Orchestration Agent 1720 under the ultimate direction of an Operator 1730) can be programmed to earn digital currency or other incentives for completing tasks, solving problems, or contributing computational resources. This currency may then act as a medium of exchange in an agent economy, driving collaboration and competition among AI agents, motivating them to optimize their actions for efficiency and productivity.

The incentive structure enables the creation of decentralized marketplaces where AI agents can exchange data, services, or computational power with other agents or human participants. Digital currency provides a transparent, automated way to measure the value of contributions, ensuring that autonomous AI systems remain aligned with predefined goals and facilitating verifiability between agents, human operators, and stakeholders. The structure promotes self-sustaining, scalable systems where AI agents evolve and improve autonomously while being rewarded for their beneficial outputs. By addressing the challenges of on-chain AI execution and providing a framework for verifiable, incentivized AI agents, Unicity paves the way for a new era of decentralized artificial intelligence that balances innovation with accountability and alignment with human values.

TOKENS

Throughout this disclosure, reference is made to the use of "tokens" and a general description is given above. The concept of a token is also generally well-understood in the field of digital transaction platforms. For completeness, however, an example of one token transaction framework, including the data model, transaction flow, and cryptographic components, is described here. The protocol ensures privacy, security, and scalability by managing tokens off-chain while relying on coordination (Unicity) for single-spend proofs. Thise skilled in the art of digital transaction systems will understand that the described token framework is just one example; for example, a system designer may choose to include other information in a token than what is described here, as long as the token remains uniquely identifiable so that its ownership can be kept unambiguous.

Token Structure

In this example, a token $T$ is a tuple defined as:

$$T = (tokenId, tokenClass, tokenValue, \Gamma, \tau, S)$$

where:

- *tokenId:* A unique 256-bit identifier for the token.
- *tokenClass:* A unique 256-bit identifier for the token class (e.g., utility token, NFT).
- *tokenValue:* A numeric value represented as a big integer.
- $\Gamma$: The genesis state, containing minting proofs and data.
- $\tau$: A sequence of transitions $\tau = [t_1, t_2, \ldots, t_n]$, where each $t_i$ represents a state transition.
- $S$: The current state of the token.

Token State

The state $S$ of a token may be defined as:

$$S = (tokenId, tokenClass, pubkey, nonce)$$

where:

- *pubkey:* The public key of the current owner.
- *nonce:* A one-time random value used to ensure state uniqueness.

Transition Structure

A transition t is defined here as:

$$t = (sourceState, input, destinationState, salt)$$

where:

- *sourceState:* The state before the transition.
- *input:* The proof of ownership and Unicity proof.
- *destinationState:* The state after the transition.
- *salt:* A random value used to obfuscate the transaction digest.

Transaction Structure

A transaction *tx* is defined here as:

$$tx = (sourceState, input, destPointer, salt)$$

where *destPointer* is a pointer to the hidden destination state, shared by the recipient.

Transaction Flow

A transaction involves creating (minting) a token, identifying which agent if to receive it, sending it, and then processing its reception.

Minting a Token

Inputs:

- *secret:* A password to lock the token.
- *tokenClass:* The token class (text string).
- *tokenValue:* The token value (numeric).

Process:

- Generate a unique *tokenId.*
- Create the genesis state $\Gamma$ with minting proofs.
- Lock the token to *secret.*
- Submit a commit to the Unicity service to obtain a single-spend proof.

Output:

- A token *T* with an initial state *S.*

Generating a Recipient Pointer

Inputs:

- *secret:* A password to lock the received token.

- *nonce:* A one-time random value.

Process:

- Compute the recipient's public key *pubkey* using *secret* and *nonce.*

- Generate a pointer *destPointer* to the hidden destination state.

Output:

- *destPointer:* A pointer to the recipient's state.

Sending a Token

Inputs:

- *secret:* The password to unlock the token.

- *destPointer:* The recipient's pointer.

Process:

- Unlock the token using *secret.*

- Create a transaction *tx* with the current state, *destPointer,* and a random *salt.*

- Submit the transaction commit to the Unicity gateway to obtain a single-spend proof.

- Update the token's state to reflect the pending transition.

Output:

- A transaction *tx* with a Unicity proof.

Receiving a Token

Inputs:

- *secret:* The password to lock the received token.

- *nonce:* The nonce used to generate the recipient's pointer.

Process:

- Resolve the transaction *tx* into a transition *t* using *nonce* and *secret.*

- Update the token's state to reflect the new ownership.

- Lock the token to *secret.*

Output:

- A token *T* with an updated state *S*.

Cryptographic Components

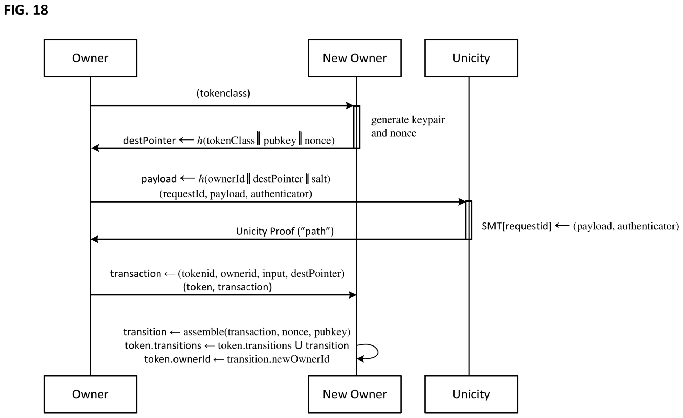

Various proofs are used in the Unicity infrastructure and these have been described above. The structure so these proofs is partly a design choice, but examples of proofs that have shown to work well are described here, with reference to Figure 18, which depicts the data flow involved in a transaction

Unicity Proof

The Unicity proof ensures that a token state is spent only once. It is represented as:

$$\Pi=(requestId,payload,authenticator)$$

where:

- requestId: A unique identifier derived from the token state.
- payload: The digest of the transaction.
- authenticator: A signature proving the commit's authenticity.

Ownership Proof

The ownership proof is a digital signature demonstrating knowledge of the private key corresponding to the public key in the token state:

$$\sigma=Sign(sk,H(tokenId \parallel tokenClass \parallel pubkey \parallel nonce))$$

where sk is the private key of the owner.

Commitment Scheme

The commitment C for a transaction is computed as: *C=H(requestId∥payload∥authenticator)* where H is a cryptographic hash function.

Pointer Obfuscation

The recipient's pointer destPointer may be computed as:

$$destPointer=H(pubkey \parallel nonce \parallel salt)$$

This ensures that the pointer reveals no information about the recipient's state.

**Claims**

1. A distributed processing system for transactions of digital assets **CHARACTERISED BY**:

   a. a plurality of autonomous agents (410-1, 410-2, 410-N; 800) that execute off-chain, each agent including an encapsulation of state representing at least one digital asset and being configured to process transaction requests that modify the agent state;
   b. a proof aggregation layer (300) that is a modular component separate from transaction execution and prevents double spending of the digital assets by:

      i. receiving requests to certify that a particular asset state has not been previously spent;
      ii. generating uniqueness attestations ($\pi$) certifying that each asset state is spent at most once; and
      iii. providing said uniqueness attestations to the agents;

in which:

> i. a sender agent (10), which intends to send one of the digital assets to a recipient agent (20), processes the corresponding transaction locally to generate a new state ($\sigma^{\wedge}$');
> ii. the sending agent (10) submits a certification request (Q) to the double-spending prevention subsystem (300) and, if the sending agent (10) is still the unique owner of the corresponding digital asset, the proof aggregation layer (300) generates a uniqueness attestation ($\pi\_inc$), for the transaction from the double-spending prevention subsystem (300);
> iii. upon receipt of the uniqueness attestation ($\pi\_inc$) the sender agent (10) transmits the new state ($\sigma^{\wedge}$') and the uniqueness attestation ($\pi\_inc$), if obtained by sender or recipient agent, to the recipient agent (20);
> iv. the recipient agent (20) verifies both correctness of the transaction execution, and validity of the uniqueness attestation as required conditions for accepting the transaction;

wherein transaction execution happens off-chain at the agents independent of global consensus and shared state among all network participants, and wherein double-spending prevention is isolated to the modular double-spending prevention subsystem.

2. The distributed processing system of claim 1, **CHARACTERISED IN THAT**:

> each agent is verifiable, uniquely addressable, self-authenticated, and executes in diverse execution environments without dependence on specific infrastructure; and
> agents interact by synchronizing provably unique state histories independent of any requirement for global state consensus.

3. The distributed processing system of claim 1 or 2, further **CHARACTERISED BY** a consensus layer (200) comprising a plurality of validators and providing a decentralized trust anchor, said consensus layer (200) maintaining a blockchain and certifying state transitions of the proof aggregation layer (300);
in which:

> each certification request comprises a request identifier, a payload, and an authenticator;
> the proof aggregation layer (300) is further configured to:
>
> > insert each certification request into an authenticated data structure at a deterministic position based on the request identifier;
> > generate a cryptographic non-deletion proof demonstrating that a batch of insertions did not delete or modify existing entries;
> > submit the cryptographic non-deletion proof and a state root to the consensus layer (200) for certification; and
> > generate uniqueness proofs for individual state transitions, each uniqueness proof comprising a proof of inclusion of the state transition in a certified state of the authenticated data structure.

4. The distributed processing system of claim 3, **CHARACTERISED IN THAT**:

> the authenticated data structure is a sparse Merkle tree (SMT);
> the uniqueness proof for a state transition comprises:
> the cryptographic proof of non-deletion provided as a zero-knowledge proof at a most recent checkpoint, demonstrating that all insertions from a previous checkpoint to the most recent checkpoint did not delete or modify existing entries;
> at least one proof of non-inclusion for the request identifier for all rounds from the most recent checkpoint to a round immediately preceding the state transition, demonstrating that the state had not been previously spent; and
> a proof of inclusion for the state transition in a current round, comprising a hash chain from a leaf node to a certified root of the SMT.

5. The distributed processing system according to claim 4, **CHARACTERISED IN THAT** the cryptographic proof of non-deletion is generated using one of:

> a hash chain-based proof having linear size; or
> a ZK-SNARK proof system with constant-size proofs, or
> a ZK-STARK proof system with logarithmic-size proofs,

the zero-knowledge proof thereby demonstrating correct execution of a non-deletion verification algorithm without revealing the contents of an insertion batch.

6. The distributed processing system according to any preceding claim, **CHARACTERISED IN THAT** the proof aggregation layer (300) has a hierarchical sharded architecture comprises a plurality of nodes, each node operating a sub-tree of the authenticated data structure and is organized into shards based on keyspace partitioning, wherein leaf positions are deterministically computed from request identifiers and each shard handles a slice of the keyspace.

7. The distributed processing system of claim 3, **CHARACTERISED IN THAT** the consensus layer (200) comprises:

   a Proof of Work (PoW) blockchain (602) forming a trust anchor;
   a Byzantine Fault Tolerant (BFT) arrangement configured to provide deterministic finality; and
   a certification mechanism wherein the BFT arrangement certifies state transitions of the proof aggregation layer (300) by including state roots in BFT blocks.

8. The distributed processing system of claim 3, **CHARACTERISED IN THAT** each agent is configured to implement programmability through predicates, the predicates comprising functions returning Boolean values that control state transitions, the predicates including at least one of:

   an ownership predicate controlling transfer of ownership, wherein the ownership predicate verifies authentication credentials of a party requesting a state transition;
   a data predicate controlling updates to agent data;
   a spawn predicate controlling creation of new agents by the agent, wherein the spawn predicate evaluates conditions for spawning and initializes a genesis state of spawned agents; and
   a split predicate controlling division of the agent into multiple agents, wherein the split predicate determines how state is partitioned among the resulting agents.

9. A method for distributed processing of transactions of digital assets **CHARACTERISED BY**:

   a. including in each of a plurality of autonomous agents (410-1, 410-2, 410-N; 800), which execute off-chain, an encapsulation of state representing at least one digital asset and being configured to process transaction requests that modify the agent state;
   b. in a proof aggregation layer (300) that is a modular component separate from transaction execution, preventing double spending of the digital assets by:

   i. receiving requests to certify that a particular asset state has not been previously spent;
   ii. generating uniqueness attestations ($\pi$) certifying that each asset state is spent at most once; and
   iii. providing said uniqueness attestations to the agents;

   in which:

   i. a sender agent (10), which intends to send one of the digital assets to a recipient agent (20), processes the corresponding transaction locally to generate a new state ($\sigma^{\wedge'}$);
   ii. the sending agent (10) submits a certification request (Q) to the double-spending prevention subsystem (300) and, if the sending agent (10) is still the unique owner of the corresponding digital asset and either the sender agent (10) or recipient agent (20) receives a uniqueness attestation ($\pi\_inc$), for the transaction from the double-spending prevention subsystem (300);
   iii. upon receipt of the uniqueness attestation ($\pi\_inc$), transmiting from the sender agent (10) the new state ($\sigma'$) and the uniqueness attestation ($\pi\_inc$), if obtained by sender, to the recipient agent (20);
   iv. by the recipient agent (20), verifying both correctness of the transaction execution, and validity of the uniqueness attestation as required conditions for accepting the transaction;

   thereby executing transactions off-chain at the agents independent of global consensus and shared state among all network participants, and preventing double-spending prevention isolated to the proof aggregation layer (300).

10. The method of claim 9, further **CHARACTERISED BY**:

   configuring each agent to be verifiable, uniquely addressable and, self-authenticated and to executes in diverse execution environments without dependence on specific infrastructure;
arranging agent interaction by synchronizing provably unique state histories independent of any requirement for global state consensus.

11. The method of claim 9 or 10, further **CHARACTERISED BY**, in a consensus layer (200) that includes a plurality of validators and provides a decentralized trust anchor,

maintaining a blockchain (602) and certifying state transitions of the proof aggregation layer (300);
in which:

each certification request comprises a request identifier, a payload, and an authenticator;
by the proof aggregation layer (300):

inserting each certification request into an authenticated data structure at a deterministic position based on the request identifier;
generating a cryptographic non-deletion proof demonstrating that a batch of insertions did not delete or modify existing entries;
submitting the cryptographic non-deletion proof and a state root to the consensus layer (200) for certification; and
generating uniqueness proofs for individual state transitions, each uniqueness proof comprising a proof of inclusion of the state transition in a certified state of the authenticated data structure.

12. The method of claim 11, further **CHARACTERISED BY**:

configuring the authenticated data structure is a sparse Merkle tree (SMT);
including in the uniqueness proof for a state transition:

the cryptographic proof of non-deletion as a zero-knowledge proof of non-deletion at a most recent checkpoint, demonstrating that all insertions from a previous checkpoint to the most recent checkpoint did not delete or modify existing entries;
at least one proof of non-inclusion for the request identifier for all rounds from the most recent checkpoint to a round immediately preceding the state transition, demonstrating that the state had not been previously spent; and
a proof of inclusion for the state transition in a current round, comprising a hash chain from a leaf node to a certified root of the SMT.

13. The method of claim 12, further **CHARACTERISED BY** generating the cryptographic proof of non-deletion using one of:

a hash chain-based proof having linear size; or
a ZK-SNARK proof system with constant-size proofs, or
a ZK-STARK proof system with logarithmic-size proofs,

whereby the zero-knowledge proof demonstrates correct execution of a non-deletion verification algorithm without revealing the contents of the insertion batch.

14. The method of any of claims 9-13, further **CHARACTERISED BY** configuring the proof aggregation layer (300) as a hierarchical sharded architecture comprising a plurality of nodes, each node operating a sub-tree of the authenticated data structure and being organized into shards based on keyspace partitioning, wherein leaf positions are deterministically computed from request identifiers and each shard handles a slice of the keyspace.

15. The method of claim 11, **CHARACTERISED BY** including in the consensus layer (200):

a Proof of Work (PoW) blockchain (602) forming a trust anchor;
a Byzantine Fault Tolerant (BFT) arrangement configured to provide deterministic finality; and
a certification mechanism wherein the BFT arrangement certifies state transitions of the proof aggregation layer (300) by including state roots in BFT blocks.

## FIG. 1A
## (Prior art)

**FIG. 1B**
**(Prior Art)**

**FIG. 2**

**FIG. 3A
(Prior art)**

Consensus

**FIG. 3B**

Unicity Infrastructure
100

410-1

410-2

• • •

410-N

**FIG. 4**

**FIG. 5**

**FIG. 6**

**FIG. 7**

Setup: Recipient holds persistent keypair $(d, P)$ where $P = d \cdot G$

| Sender | Recipient |
|---|---|
| | $r \xleftarrow{\$} \mathbb{Z}_n$ |
| | $P_{tx} \leftarrow (d + r) \cdot G$ |
| | $R \leftarrow r \cdot G$ |
| $\xleftarrow{\quad (P_{tx}, R) \quad}$ | |
| $\mathsf{tx} \leftarrow \{P_{tx}, R, \ldots\}$ | |
| $\xrightarrow{\quad \mathsf{tx} \quad}$ | |
| | $r' \leftarrow \mathcal{H}(d \,\|\, R)$ |
| | $d_{tx} \leftarrow d + r' \bmod n$ |
| | $\sigma \leftarrow \mathsf{Sign}(d_{tx}; \mathsf{tx}_{next})$ |

**FIG. 8**

Setup: Recipient has persistent keypair $(d, P = d \cdot G)$ and publishes $P$

| Sender | Recipient |
|---|---|
| $r \xleftarrow{\$} \mathbb{Z}_n^*$ | |
| $R \leftarrow r \cdot G$ | |
| $s \leftarrow \mathcal{H}_1(r \cdot P \,\|\, R \,\|\, \mathsf{tx}_{prev})$ | |
| $P_{tx} \leftarrow P + s \cdot G$ | |
| $\mathsf{tx} \leftarrow \{P_{tx}, R, \ldots\}$ | |
| $\xrightarrow{\quad \mathsf{tx} \quad}$ | |
| | **if** $R = \mathcal{O}$ **then abort** |
| | $s' \leftarrow \mathcal{H}_1(d \cdot R \,\|\, R \,\|\, \mathsf{tx}_{prev})$ |
| | **if** $P + s' \cdot G \neq P_{tx}$ **then abort** |
| | $d_{tx} \leftarrow d + s' \bmod n$ |
| | *Sign next transaction using $d_{tx}$* |

**FIG. 9**

**FIG. 10**

```
┌─────────────────────────────────┐
│         Consensus Layer         │
│              200                │
└─────────────────────────────────┘
```

$$(r_i, r_{i-1}, \pi) \qquad c = (i, r_i, r_{i-1}; s_{cl})$$

```
              △
             SMT
             330
```

$$B = (k_1, k_2, \ldots, k_j)$$

$$\pi^{\text{inc}}_{k \in \{B_1, \ldots, B_i\}} = (v_k \rightsquigarrow r, c)$$
$$\pi^{\overline{\text{inc}}}_{k \notin \{B_1, \ldots, B_i\}} = (\varnothing_k \rightsquigarrow r, c)$$

```
┌─────────────────────────────────┐
│      Token Users – Agents       │
│              800                │
└─────────────────────────────────┘
```

**FIG. 11**

**FIG. 12**

**FIG. 13**

Proof Aggregation Layer
300

State Transition Request

*ID* = Alice Public Key ‖ *Hash*(current state)
*Payload* = Hash (State Translation)
Authenticator = *Sig* (*Payload*)

Unicity Proof

**FIG. 14**

Alice Address
Agent ID
Data
Owner
Predicate

Bob Address
Hash(Current
State)

Unicity
Proof

Current State

State Transition

Agent

Agent

Alice

Bob

**FIG. 15**

**FIG. 16**

**FIG. 17**

**FIG. 18**

Owner     New Owner     Unicity

(tokenclass)

generate keypair
and nonce

destPointer $\leftarrow h(\text{tokenClass} \parallel \text{pubkey} \parallel \text{nonce})$

payload $\leftarrow h(\text{ownerId} \parallel \text{destPointer} \parallel \text{salt})$
(requestId, payload, authenticator)

Unicity Proof ("path")

SMT[requestid] $\leftarrow$ (payload, authenticator)

transaction $\leftarrow$ (tokenid, ownerid, input, destPointer)
(token, transaction)

transition $\leftarrow$ assemble(transaction, nonce, pubkey)
token.transitions $\leftarrow$ token.transitions $\cup$ transition
token.ownerId $\leftarrow$ transition.newOwnerId

Owner     New Owner     Unicity

## EUROPEAN SEARCH REPORT

**Application Number**

EP 25 20 7749

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/134612 A1 (HANGZHOU FUZAMEI TECH CO LTD [CN]) 30 June 2022 (2022-06-30) | 1,2,6,9, 10,14 | INV.<br>H04L9/00 |
| A | * abstract *<br>* "Summary of the invention" *<br>----- | 3-5,7,8, 11-13,15 | |
| A | CN 115 280 346 A (NCHAIN LICENSING AG) 1 November 2022 (2022-11-01)<br>* abstract *<br>* paragraphs [0001] - [0016] *<br>----- | 1-15 | |
| A | CN 115 427 995 A (NCHAIN HOLDINGS LTD) 2 December 2022 (2022-12-02)<br>* abstract *<br>* paragraphs [0001] - [0014] *<br>----- | 1-15 | |

TECHNICAL FIELDS
SEARCHED       (IPC)

H04L

The present search report has been drawn up for all claims

| Place of search | Date of completion of the search | Examiner |
|---|---|---|
| Munich | 12 February 2026 | Di Felice, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 7749

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | Publication date | Patent family member(s) | | Publication date |
|---|---|---|---|---|
| WO 2022134612 A1 | 30-06-2022 | CN | 112488725 A | 12-03-2021 |
| | | WO | 2022134612 A1 | 30-06-2022 |
| CN 115280346 A | 01-11-2022 | CN | 115280346 A | 01-11-2022 |
| | | EP | 4088499 A1 | 16-11-2022 |
| | | EP | 4429165 A2 | 11-09-2024 |
| | | GB | 2592980 A | 15-09-2021 |
| | | JP | 7661357 B2 | 14-04-2025 |
| | | JP | 2023516466 A | 19-04-2023 |
| | | US | 2023125507 A1 | 27-04-2023 |
| | | WO | 2021181177 A1 | 16-09-2021 |
| CN 115427995 A | 02-12-2022 | CN | 115427995 A | 02-12-2022 |
| | | EP | 4035106 A1 | 03-08-2022 |
| | | JP | 2022549874 A | 29-11-2022 |
| | | US | 2022405752 A1 | 22-12-2022 |
| | | WO | 2021059090 A1 | 01-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63705066